# EUROPÄISCHE PATENTSCHRIFT

(11) **EP 2 399 237 B1**
(45) Veröffentlichungstag und Bekanntmachung des Hinweises auf die Patenterteilung: **14.08.2013**
(21) Anmeldenummer: 10708956.7
(22) Anmeldetag: 19.02.2010
(51) Int. Cl.: G01N 23/04

(54) **VERFAHREN ZUM MESSEN EINES OBJEKTS**
METHOD FOR MEASURING AN OBJECT
PROCÉDÉ DE MESURE D'UN OBJET

(30) Priorität: 20.02.2009 DE 102009003514; 10.03.2009 DE 102009003597; 24.04.2009 DE 102009003826; 20.05.2009 DE 102009025846; 17.07.2009 DE 102009026198; 24.08.2009 DE 102009043838; 09.11.2009 DE 102009044476; 18.11.2009 DE 102009044580
(43) Veröffentlichungstag der Anmeldung: 28.12.2011
(73) Patentinhaber: Werth Messtechnik GmbH, 35394 Giessen (DE)
(72) Erfinder: CHRISTOPH, Ralf, 35394 Gießen (DE); SCHMIDT, Ingomar, 35418 Buseck (DE); HAMMER, Michael, 35447 Reiskirchen (DE); WIEDENHÖFER, Thomas, 35415 Pohlheim-Holzheim (DE)
(74) Vertreter: Stoffregen, Hans-Herbert
(86) Internationale Anmeldenummer: PCT/EP2010/052145
(87) Internationale Veröffentlichungsnummer: WO 2010/094774

(56) Entgegenhaltungen:
- DE-A1-102005 036 527

## Beschreibung

Die Erfindung bezieht sich auf ein Verfahren zur Bestimmung von Strukturen und/oder Geometrie eines Objektes wie Werkstücks mittels eines computertomographischen Messsystems, umfassend zumindest eine Strahlungsquelle, zumindest einen Strahlungsdetektor und zumindest eine Drehachse. Auch nimmt die Erfindung Bezug auf eine Anordnung zur Bestimmung von Strukturen und/oder Geometrie eines Objektes mittels eines Messsystems, vorzugsweise computertomographischen Messsystems, bestehend aus zumindest einer Strahlungsquelle, zumindest einem Strahlungsdetektor und zumindest einer Drehachse.

Die Nutzung der Computertomografie zu messtechnischen Zwecken kann nur dann mit hoher Genauigkeit erfolgen, wenn die rekonstruierten Tomogramme frei von Artefakten sind, welche durch verschiedene physikalische Effekte verursacht werden. Diese physikalischen Effekte sind u. a. die Strahlaufhärtung, die Streuung, aber auch Beugungs- und Brechungseffekte. Zur Korrektur der aus diesen entstehenden Artefakte wird zu- meist eine Kennlinie berechnet, welche den Zusammenhang zwischen der durchstrahlten Länge bzw. auch der Geometrie des Bauteiles und den mit einem Detektor gemessenen Schwächungswerten berücksichtigt.

Die EP 1415179 B1 beschreibt ein Verfahren, bei dem die Durchstrahlungslängen aus den aus vollständigen Projektionsdaten hervorgehenden artefaktbehafteten 3D-Voxeldaten eines Prüflings iterativ ermittelt werden. Sämtliche dabei ermittelten Artefakte werden in Form einer Strahlaufhärtungskorrektur berücksichtigt. Dabei wird eine einzige Kennlinie aus den Messergebnissen aller Pixel des Detektors bestimmt.

Der DE-A-10 2005 036 527 ist eine Röntgen-CT-Prüfanlage mit einem Prüfschlitten zur Aufnahme eines zu prüfenden Objekts zu entnehmen, der eine senkrecht zum Fächerstrahl rotierbare Rotationsachse aufweist, wobei der Prüfschlitten innerhalb eines Positionierbereichs über zwei Freiheitsgrade bewegt werden kann.

In der WO 2006/094493 (= EP 06722577.1) wird alternativ ein Verfahren vorgeschlagen, bei dem die Durchstrahlungslängen in den verschiedenen Drehstellungen des Messobjektes bezüglich der CT-Sensorik mit Hilfe des CAD-Modells des Werkstücks bestimmt werden. Hierbei ist es notwendig, eine exakte Ausrichtung des Werkstücks im CT-Messsystem zu den CAD-Daten durchzuführen.

Bei den zum Stand der Technik zählenden Verfahren wird jedoch nicht berücksichtigt, dass nicht allein die Durchstrahlungslänge, sondern auch die Geometrie des Werkstücks insbesondere in den verschiedenen Drehlagen, unterschiedliche Artefakte, z. B. durch unterschiedliche Streustrahlung, hervorruft. Außerdem wird durch die Korrektur mit Hilfe einer einzigen Kennlinie für die Projektionsdaten aller Pixel des Detektors nicht berücksichtigt, dass ebenso Artefakte durch unterschiedliche Eigenschaften der einzelnen Pixel ausgelöst werden.

Bei bisher bekannten Messsystemen, vorzugsweise computertomographischen Messsystemen unter Verwendung von Drehachsen, ist es notwendig, dass das Werkstück, wie rotationssymmetrisches Werkstück, mittig auf einer physikalischen Drehachse platziert wird, um Messergebnisse hoher Genauigkeit zu erzielen. Bei computertomographischen Abbildungen muss zudem gewährleistet sein, dass die Achse, um die das Werkstück gedreht wird, in allen Drehstellungen mittig bzgl. des Detektors angeordnet bleibt, um eine Rekonstruktion zu ermöglichen. Um das Messobjekt mittig zur Drehachse auszurichten, ist ein zeitaufwändiges Justieren notwendig.

Eine entsprechende Anordnung zum Justieren des Werkstücks in die Mitte der Drehachse ist als Messgerät der Serie "Primar" der Firma Mahr, Göttingen, bereits bekannt. Die ansonsten bei Drehung entstehende seitliche Bewegung des Werkstücks sorgt insbesondere bei sehr kleinen Teilen, welche vorzugsweise in tomographisch oder optisch hoher Vergrößerung gemessen werden, dafür, dass das Werkstück nicht in allen Drehstellungen vollständig auf dem Detektor abgebildet wird. Dies ist jedoch Voraussetzung für eine auswertbare Messung. Ebenso erfordert der Einsatz in der Produktionslinie, beispielsweise verbunden mit einer automatischen Bestückung, schnelle Einricht- und Justierzeiten.

Nachteilig bei bisher bekannten Verfahren zu computertomographischen Messungen ist zudem, dass Teile, die deutlich unterschiedliche Dimensionen besitzen, nicht in allen Drehstellungen ausreichend kontrastreich mit der gleichen Strahlenergie abgebildet werden können. Ursächlich hierfür sind die unterschiedlich auftretenden Durchstrahlungslängen und die damit verbundene Schwächung der Messstrahlung. Die den Detektor erreichende Strahlung liefert nur dann auswertbare Informationen, wenn sämtliche Bereiche (Pixel) des Zeilen- oder Flächendetektors Intensitäten über einem Minimal- und unter einem Maximalwert beinhalten. Um diesen so genannten auswertbaren Kontrast in den Durchstrahlungsbildern aller Drehstellungen mit der gleichen Strahlenergie zu erhalten, dürfen die Unterschiede in den Strahlschwächungen entlang der Durchstrahlungslängen in der kleinsten und zweitgrößten Dimension des Werkstücks einen bestimmten Wert nicht überschreiten. Die größte Werkstückdimension wird zumeist vorteilhaft senkrecht zur Durchstrahlungsrichtung angeordnet, soweit das Messvolumen dies zulässt.

Werkstücke, die in zwei Dimensionen sehr ausgedehnt und in der dritten sehr kurz sind, können momentan nur mit Hilfe zumindest zweier Messungen mit unterschiedlichen Strahlenergien gemessen werden. Dazu wird jeweils eine komplette Messung in allen Drehstellungen von 0° bis 360° mit den zumindest zwei verschiedenen Strahlenergien durchgeführt. Anschließend wird für jede Drehstellung ein Durchstrahlungsbild aus den zumindest zwei Durchstrahlungsbildern der Einzelmessungen errechnet. Diese Datenfusion beinhaltet eine Anpassung der jeweils zusammengehörigen Durchstrahlungsbilder jeder Drehstellung. Diese Bilder enthalten naturgemäß überstrahlte oder zu dunkle Bereiche, also Bereiche ohne auswertbaren Kontrast. Entsprechende dürfen zur Auswertung nicht verwendet werden und werden durch Informationen aus jeweils zumindest einem der anderen Durchstrahlungsbilder dieser Drehstellung ersetzt. Um den absoluten Bezug der Intensitäten der Bilder zu gewährleisten, erfolgt zuvor eine Anpassung bzw. Normierung der zugehörigen Bilder auf das gleiche Intensitätsniveau, vorzugsweise anhand der Intensitäten von den Bereichen der Durchstrahlungsbilder, die in allen Bildern gleichzeitig weder überstrahlt noch zu dunkel sind. Dies ist beispielsweise durch sog. "Downscaling", "Upscaling" oder durch Mittelung möglich und stellt in Verbindung mit dem erfindungsgemäßen Verfahren ebenso einen Bestandteil der vorliegenden Erfindung dar.

Zur gemeinsamen Auswertung von Messwerten computertomographischer Messungen, welche an unterschiedlichen Stellen des gleichen Werkstücks erfolgen, sind dem Stand der Technik bisher nur Verfahren bekannt, bei denen Messungen in gleichen Vergrößerungen und damit nahezu gleichen Pixel- bzw. Voxelrastern aneinandergesetzt werden. Eine entsprechende Vorgehensweise ist in der WO-A-2005/119174 beschrieben. Die Aneinanderreihung der Messdaten erfolgt dabei unter Berücksichtigung der Relativpositionen zwischen Messobjekt, Strahlungsquelle und Detektor, welche vorzugsweise durch genaue Bewegungsachsen eines Koordinatenmessgerätes verfahren werden oder über Stitching-Verfahren. Nicht gelöst wird damit jedoch die gemeinsame Auswertung von Messdaten, die aus Messungen mit unterschiedlichen Vergrößerungen ermittelt wurden. Dabei müssen insbesondere abweichende Pixel- bzw. Voxelraster berücksichtigt werden. Die gemeinsame Auswertung von Messwerten aus unterschiedlichen Vergrößerungen ist notwendig, um beispielsweise kleine Details eines Werkstücks in hoher Vergrößerung sehr genau zu bestimmen, die Position des Details im Gesamtvolumen aber dennoch bestimmen zu können, wenn auch mit geringerer Genauigkeit infolge der dazu notwendigen geringeren Vergrößerung und damit Auflösung.

Nicht gelöst ist dabei insbesondere, dass Teile des Messobjektes bei der tomographischen Messung in hohen Vergrößerungen das Messvolumen senkrecht zur Drehachse in zumindest einigen wenigen Drehstellungen verlassen. Die fehlenden Durchstrahlungswerte dieser senkrecht zur Drehachse auf dem Detektor nicht abgebildeten Teile verhindern die Rekonstruktion der Volumendaten des Werkstücks. Im Gegensatz dazu sind dem Stand der Technik nur Verfahren zu entnehmen, bei denen sich die nicht abgebildeten Teile des Werkstücks ausschließlich in Richtung der Drehachse befinden.

Der vorliegenden Erfindung liegt daher auch die Aufgabe zugrunde, die Nachteile des Standes der Technik zu vermeiden und grundsätzlich Werkstücke unterschiedlicher Abmessungen mit hoher Genauigkeit unter Vermeidung aufwändiger Korrekturverfahren messen zu können, insbesondere die Probleme der Werkstücksausrichtung zu vermeiden.

Die vorliegende Erfindung löst die Aufgabe, insbesondere die Problematik der Werkstückausrichtung dadurch, dass Durchstrahlungsbilder, die in verschiedenen Drehstellungen des Werkstücks ermittelt werden, durch die Kombination translatorischer und rotatorischer Bewegungen direkt genau kombiniert werden, ohne dass eine vorherige Ausrichtung des Werkstücks auf die physikalische Drehachse notwendig ist. Grundgedanke ist dabei, dass das Messobjekt um eine virtuelle Drehachse gedreht wird, die nicht zwangsläufig mit der physikalischen Drehachse zusammenfallen muss und die physikalische Drehachse in einer oder zwei Achsen und ggf. der Detektor in zumindest einer Achse während der Drehung der physikalischen Drehachse bewegt wird. Durch die Drehung des Werkstücks um eine virtuelle Drehachse, vorzugsweise Symmetrieachse des Werkstücks, wird erreicht, dass das Werkstücks unabhängig von der aktuellen Drehstellung immer an annährend der gleichen Position des Detektors abgebildet wird. Die seitliche Bewegung des Werkstücks bezüglich des Detektors wird durch folgende zwei Möglichkeiten vermieden.

Eine erste Möglichkeit beinhaltet, dass der Detektor unbewegt bleibt, das Messobjekt aber um eine bezüglich des Detektors fest stehende Drehachse rotiert. Dies ist insbesondere auch dann möglich, wenn das Werkstück nicht mittig auf der physikalischen Drehachse angeordnet ist. Dies wird erreicht, indem die physikalische Drehachse, auf der das Werkstück fest angeordnet ist, in zwei Richtungen jeweils so positioniert wird, dass das Werkstück um eine raumfeste virtuelle Drehachse rotiert. Die physikalische Drehachse bewegt sich dabei während ihrer Drehung auf einer Kreisbahn um die virtuelle Drehachse, allerdings nur zusätzlich durch die beiden translatorischen Bewegungen. Es kann die translatorische Bewegung beispielsweise durch einen Kreuztisch, welcher zwei translatorische Freiheitsgrade aufweist, erfolgen.

Eine zweite Möglichkeit beinhaltet das geziette Nachführen des Detektors in Kombination mit zumindest einer translatorischen Bewegung der Drehachse. Der Detektor wird der virtuellen Drehachse, die sich nun in einer Richtung während der Drehung der physikalischen Drehachse bewegt, in dieser einen Richtung nachgeführt. Diese Richtung steht senkrecht zur physikalischen Drehachse und senkrecht zur Normalen der Detektorebene. In Richtung der Normalen der Detektorebene steht die virtuelle Drehachse jedoch fest, auch dann, wenn das Messobjekt nicht mittig auf der physikalischen Drehachse angeordnet ist. Dies wird erreicht, indem die physikalische Drehachse entsprechend in Richtung der Normalen der Detektorebene nachgerührt wird. Dabei vollzieht die physikalische Drehachse eine lineare Bewegung, um den Abstand zwischen virtueller Drehachse und Detektorebene in Richtung der Normalen der Detektorebene konstant zu halten. Die seitliche Bewegung der virtuellen Drehachse und des Detektors im Abbildungsstrahl führen dazu, dass gleiche Bereiche des Werkstücks nun unter veränderten Winkeln des Abbildungsstrahls abgebildet werden. Die dabei entstehenden Messabweichungen können durch mathematische Methoden und ggf. eine Verkippung des Detektors um eine parallel zur Drehachse verlaufenden Richtung korrigiert werden. Die entsprechenden Verfahren sind bereits in der DE-A-10 2008 044 437 beschrieben. Voraussetzung für die Anwendung der Korrektur ist, dass Drehmittelpunktversatz und die Vergrößerung, also die Lage von Abbildungsstrahl, Drehachse und Detektor zueinander bekannt sind. Die zur Bestimmung notwendigen Verfahren beschreibt die EP 05750966.3.

Um die Bedingung zu erfüllen, dass die Achse, um die das Werkstück gedreht wird, also die virtuelle Drehachse, in allen Drehstellungen mittig bzgl. des Detektors angeordnet bleibt, wird im ersten Schritt nach dem Anordnen des Werkstücks auf der physikalischen Drehachse, diese physikalische Drehachse mit Hilfe zumindest einer translatorischen Bewegung so verschoben, dass die virtuelle Drehachse mittig zum Detektor ausgerichtet ist. Entsprechende Ausrichtungen, beispielsweise mit Umschlagsmessungen können dem Stand der Technik entnommen werden, beispielsweise der EP 05750966.3. Vorzugsweise ist diese Ausrichtung schnell und genau möglich, wenn hochgenaue Achsen eines Koordinatenmessgerätes, vorzugsweise CNC-Achsen, verwendet werden.

Zur Steuerung der Kombination aus translatorischen und rotatorischen Bewegungen wird ein Steuerrechner eingesetzt. Diesem muss dazu die relative Lage zwischen virtueller Drehachse und physikalischer Drehachse bekannt sein. Diese Lage ist entweder aus bereits beschriebenen Verfahren zur Ausrichtung des Werkstücks bekannt oder wird ermittelt, indem vorab in verschiedenen Drehstellungen der physikalischen Drehachse aufgenommene Kontrollmessungen, vorzugsweise Durchstrahlungsbilder, ausgewertet werden. Die dazu notwendigen Verfahren beschreiben die DE-A-10 2008 044 437 und die EP 05750966.3. Diese Verfahren können ebenso während der eigentlichen Messungen, zwischen den Messungen in den verschiedenen Drehstellungen erfolgen. Falls im Gerät weitere Sensoren vorhanden sind, können diese vorab oder während der Messung zur Bestimmung der Relativlage zwischen virtueller Drehachse und physikalischer Drehachse verwendet werden.

Durchstrahlungsbilder für die eigentliche Messung werden vorzugsweise nur dann aufgenommen, wenn die vorab definierten Winkel um die virtuelle Drehachse erreicht sind. Dadurch werden ein konstantes Winkelraster und die herkömmliche Rekonstruktion des Messvolumens ermöglicht. Der eingesetzte Steuerrechner erkennt dazu, wann mit Hilfe der Kombination aus translatorischer und rotatorischer Bewegung die jeweilige Drehstellung und laterale Position erreicht ist.

Als Werkstücke werden vorzugsweise rotationssymmetrische Teile und/oder Werkzeuge und/oder tomographierbare Teile eingesetzt.

In einem weiteren Aspekt der Erfindung wird die Messung von Teilen mit deutlich unterschiedlichen Dimensionen, die nicht in allen Drehstellungen ausreichend kontrastreich mit der gleichen Strahlenergie abgebildet werden können, vereinfacht. Dazu werden weniger Messungen als im Stand der Technik benötigt, da nicht für jede Drehstellung eine Aufnahme mit jeder Strahlenergie benötigt wird.

Erfindungsgemäß wird die Strahlenergie und/oder der verwendete Wellenlängenbereich, vorzugsweise Röhrenbeschleunigungsspannung, Röhrenstrom und/oder Wellenlängen einschränkende Filter, an die jeweils vorliegende Geometrie, vorzugsweise Durchstrahlungslänge und/oder das vorliegende Material, vorzugsweise die Materialdichte angepasst. Damit liegt nicht für jede Drehstellung ein Bild mit allen Strahlenergien vor. Eine schnellere Messung ergibt sich dadurch, dass vorzugsweise für die Messung mit beispielsweise zwei Strahlenergien in jeder Drehstellung nur ein Bild mit der einen oder der anderen Strahlenergie aufgenommen wird. Für die spätere Datenfusion ist es unter Umständen notwendig, zumindest für einige Drehstellungen mit mehr als einer Strahlenergie Bilder aufzunehmen.

Die Auswahl der für die je Drehstellung zu verwendenden Strahlenergie erfolgt anhand von vorab aufgenommenen wenigen Durchstrahlungsbildern und/oder anhand der während der eigentlichen Messung in einer oder mehreren der vorherigen Drehstellungen aufgenommenen Bildern und/oder anhand vorab bekannter Geometrie- und/oder Materialdaten, vorzugsweise aus dem CAD-Modell des Werkstücks. Mit Vorabaufnahmen kann in wenigen Drehstellungen durch Variation der Aufnahmeparameter wie der Strahlenergie ein Datensatz mit passenden Strahlenergien, vorzugsweise automatisch ermittelt werden. Für die fehlenden Drehstellungen werden die Strahlenergien interpoliert. Dies ist möglich, da mit sprunghaften Änderungen der Durchstrahlungslängen oder Materialien von Drehstellung zu Drehstellung nicht zu rechnen ist. Ebenso können deshalb auch aus den die Strahlenergie beschreibenden Parametern der vorherigen oder mehreren vorherigen Drehstellungen des eigentlichen Messablaufes, vorzugsweise durch Mittelung oder Extrapolation, die Parameter für die aktuelle Drehstellung ermittelt werden. Durch ständige oder erst nach mehreren Drehstellungen erfolgende Überwachung der Bildparameter der aufgenommenen Durchstrahlungsbilder, vorzugsweise durch Analyse der Überschreitung der maximalen Intensität und Unterschreitung der minimalen Intensität, erfolgt dann die Anpassung der Strahlenergie für die jeweils aktuelle Drehstellung. Zudem oder alternativ können vorab zur Verfügung stehende Informationen über die Geometrie, und damit nach Registrierung für die einzelnen Drehstellungen zur Verfügung stehenden Durchstrahlungslängen, und/oder das Material des Werkstücks genutzt werden, um die zu verwendende Strahlenergie für jede oder einzelne Drehstellungen festzulegen. Zwischenwerte können wiederum interpoliert werden. Aus den Werkstückdaten können mit Hilfe von Simulation der Abbildung, vorzugsweise durch Simulation der Strahlschwächung, der Streuung und/oder der Detektorempfindlichkeit, die notwendigen Strahlenergien für die jeweiligen Drehstellungen ermittelt werden, damit die Durchstrahlungsbilder einen auswertbaren Kontrast beinhalten.

Um die bereits zum Stand der Technik zählende Anpassung bzw. Normierung der mit unterschiedlichen Strahlenergien aufgenommenen zugehörigen Bilder auf das gleiche Intensitätsniveau zu ermöglichen, ist eine virtuelle Erzeugung der Durchstrahlungsbilder mit den Strahlenergien, mit denen nicht gemessen wurde durch Interpolation möglich. Als Grundlage dafür werden vorzugsweise in benachbarten Drehstellungen ermittelte Durchstrahlungsbilder gleicher Strahlenergie verwendet. Zudem ist die Anpassung durch Vergleich der verwendeten Strahlungsparameter möglich. Dazu werden anhand ausgewählter zusammengehöriger Bilderpaare gleicher Drehstellung aber unterschiedlicher Strahlenergien Transformationsgleichungen bestimmt, die vorzugsweise für Bilder ähnlicher Strahlenergien und/oder ähnlicher auf dem Detektor vorliegender Intensitätsverteilungen verwendet werden. Fehlende Transformationsgleichungen für weitere Strahlenergien oder Intensitätsverteilungen werden wiederum interpoliert.

Die gemeinsame Auswertung von Messwerten computertomographischer Messungen, die an unterschiedlichen Stellen und/oder mit unterschiedlichen Vergrößerungen und damit Pixel- bzw. Voxelrastern aufgenommen wurden löst die vorliegende Erfindung durch Merging und/oder Resampling der rekonstruierten Volumendaten der unterschiedlichen Messungen. Die einzelnen Messungen können sich dabei räumlich überlagern, wobei die Rekonstruktionswerte, vorzugsweise Grauwerte, in den Überlappungsbereichen gewichtet gemittelt werden. Die Gewichtung erfolgt beispielsweise in Abhängigkeit zum Abstand zu den Überlappungsgrenzen. Resampling auf ein einheitliches dreidimensionales Raster ist notwendig, um die nachfolgende Anwendung von Volumenfiltern auf den gesamten zusammengefügten Messdatensatz zu ermöglichen.

Werden Details eines Werkstücks in hoher Vergrößerung ermittelt, so werden unter Umständen Teile des Werkstücks in einigen Drehstellungen nicht auf dem Detektor abgebildet. Befinden sich diese nicht abgebildeten Teile seitlich in einer Richtung senkrecht zur physikalischen und/oder virtuellen Drehachse außerhalb des Messbereiches, so werden die in den Durchstrahlungsbildern fehlenden Bereiche aus den Messwerten, vorzugsweise den Durchstrahlungsbildern des jeweils gleichen Drehwinkels, zumindest einer Messung mit geringerer Vergrößerung errechnet, bei der der entsprechende Teil des Werkstücks auf dem Detektor abgebildet wurde. Die Berechnung der jeweiligen Durchstrahlungswerte erfolgt vorzugsweise mit Resamplingverfahren und/oder Interpolationsverfahren und/oder Extrapolationsverfahren.

Voraussetzung für die gemeinsame Auswertung der mehreren Datensätze von Volumendaten, insbesondere Grauwerte ist die genaue Zuordenbarkeit im Raum. Die Bewegung der Komponenten zur Veränderung des Messausschnittes des Werkstücks und zur Veränderung der Vergrößerung, also die das Werkstück tragende Drehachse, die Röntgenstrahlquelle und der Detektor erfolgt daher mit genauen Koordinatenmessgeräteachsen. Im Gegensatz zu Stitching-Verfahren müssen dadurch nicht zwangsläufig Überlappungsbereiche existieren.

Beim Resampling von Volumendaten werden die verschiedenen Datensätze zunächst im Raum entsprechend ihrer Aufnahmeposition angeordnet. Dazu existiert für jeden Grauwert eine x-, y- und z-Position. Anschließend wird ein festes x-, y-, z-Raster für alle Datensätze festgelegt, für welches die zugehörigen Grauwerte interpoliert werden. Damit wird ein einheitlich darstellbarer und auswertbarer Datensatz erzeugt. Erst dadurch ist es möglich, Distanzen zwischen hoch aufgelösten Merkmalen zu bestimmen und volumenbasierte Filter anzuwenden.

Vorzugsweise wird das bzw. die Verfahren in einem Koordinatenmessgerät eingesetzt und/oder die Anordnung in einem Koordinatenmessgerät integriert.

Die Erfindung zeichnet sich demzufolge u. a. durch ein Verfahren zur Bestimmung von Strukturen und/oder Geometrie eines Objektes wie Werkstücks mittels eines Messsystems, vorzugsweise computertomographischen Messsystems, umfassend zumindest eine Strahlungsquelle, zumindest einen Strahlungsdetektor und zumindest eine Drehachse dadurch aus, dass Aufnahmen, vorzugsweise Durchstrahlungsbilder, stammend aus verschiedenen Drehstellungen des Werkstücks kombiniert werden, für die:
- das Werkstück, mithilfe einer Kombination aus rotatorischer und translatorischer Relativbewegung zwischen Werkstück und Detektor, um eine von der physikalischen Drehachse verschiedenen, resultierenden Drehachse gedreht wird und
- Messobjekt, Strahlungsquelle und Detektor mehrere Positionen relativ zueinander einnehmen. Dabei ist insbesondere vorgesehen, dass das Werkstück, mithilfe einer Kombination aus rotatorischer und translatorischer Bewegung, um eine von der physikalischen Drehachse verschiedenen Drehachse gedreht wird, wobei die physikalische Drehachse bezüglich des Detektors und/oder der Strahlungsquelle nicht ortsfest ist, indem die physikalische Drehachse in zumindest einer translatorischen Richtung verstellt wird und/oder der Detektor in zumindest einer translatorischen Richtung und/oder zumindest einer rotatorischen Richtung verstellt wird bzw. dass das Werkstück, mithilfe einer Kombination aus rotatorischer und translatorischer Bewegung, um eine von der physikalischen Drehachse verschiedenen Drehachse gedreht wird, indem der Detektor fest steht und die physikalische Drehachse in zwei translatorischen Richtungen verstellt wird, wobei die erste Richtung nahezu senkrecht zur Detektorebene verläuft und die zweite Richtung nahezu senkrecht zur Richtung der physikalischen Drehachse und nahezu senkrecht zur Normalen der Detektorebene verläuft.

Es wird vorgeschlagen, dass das Werkstück um eine bezüglich des Detektors und/oder der Strahlungsquelle nicht ortsfeste physikalische Drehachse gedreht wird, indem die physikalische Drehachse in einer translatorischen Richtung verstellt wird, die nahezu senkrecht zur Detektorebene verläuft, und der Detektor in einer in der Detektorebene verlaufenden Richtung verstellt wird, welche senkrecht zur Richtung der physikalischen Drehachse ist und vorzugsweise der Detektor um eine Richtung gedreht wird, die nahezu parallel zur physikalischen Drehachse ist und/oder die Messergebnisse unter Berücksichtigung der bzgl. der Beleuchtung außennittigen Durchstrahlung des Werkstücks und/oder bzgl. der Beleuchtung vorhandenen Drehung des Detektors korrigiert werden.

Unabhängig hiervon kann die von der physikalischen Drehachse verschiedene Drehachse die virtuelle Drehachse des Werkstücks, vorzugsweise Symmetrieachse sein.

Bevorzugterweise bewegt sich die physikalische Drehachse auf einer geschlossenen glatten Kurve wie elliptischen Bahn, insbesondere Kreisbahn, um die virtuelle Drehachse oder auf einer Geraden, welche vorzugsweise senkrecht zur Detektorebene verläuft. Mit Hilfe der erfindungsgemäßen Lehre können Strukturen und/oder Geometrien von rotationssymmetrischen Teilen und/oder Werkzeugen und/oder tomographierbaren Teilen bestimmt werden.

Es besteht die Möglichkeit, dass eine Messung ohne vorheriges Ausrichten des Werkstücks zur physikalischen Drehachse erfolgt und während der rotatorischen Bewegung der physikalischen Drehachse eine translatorische Bewegung der physikalischen Drehachse und/oder des Detektors erfolgt, wobei die virtuelle Drehachse durch vor und/oder während der eigentlichen Messung erfolgtes Ausrichten, vorzugsweise mit Hilfe einer CNC-gesteuerten Koordinatenachse, stets mittig zum Detektor angeordnet bleibt.

Erfinderisch ist auch, dass ein Steuerrechner die relative Lage der virtuellen Drehachse zur physikalischen Drehachse im Raum ermittelt und damit die Kombination aus translatorischen und rotatorischen Bewegungen steuert, indem
- in zumindest zwei vorab oder zwischen den eigentlichen Messungen in den verschiedenen Drehstellungen eingenommenen Drehstellungen der physikalischen Drehachse Kontrollmessungen, vorzugsweise Durchstrahlungsbilder, aufgenommenen werden, aus welchen jeweils Lage der virtuellen Drehachse zur physikalischen Drehachse oder zu einem Lage der physikalischen Drehachse charakterisierenden Körper, wie beispielsweise Zylinder oder Dorn, in zumindest einer Koordinate bestimmt wird und die Ergebnisse der Kontrollmessungen kombiniert werden und/oder
- Lage der virtuellen Drehachse zur physikalischen Drehachse durch weitere im Gerät integrierte Sensorik vorab oder während der Messung bestimmt wird.

Bevorzugterweise werden Durchstrahlungsbilder jeweils nur dann aufgenommen, wenn vorab definierte Winkel um die virtuelle Drehachse erreicht sind.

Gleichfalls ist die Möglichkeit gegeben, dass Aufnahmen, vorzugsweise Durchstrahlungsbilder für die verschiedenen Drehstellungen mit unterschiedlichen Strahlenergien aufgenommen werden, wobei nicht für jede Drehstellung Aufnahmen mit allen verwendeten Strahlenergien erfolgen.

Es besteht die Möglichkeit, dass die unterschiedlichen Strahlenergien durch Veränderung der Beschleunigungsspannung und/oder des Röhrenstroms der Strahlung erzeugenden Quelle, vorzugsweise Röntgenröhre, und/oder Variation der eingesetzten Strahlfilter erzeugt werden.

Auch ist vorgesehen, dass die jeweils verwendete Strahlenergie in Abhängigkeit der aktuellen maximal vorhandenen und/oder minimal vorhandenen Durchstrahlungslänge in der jeweiligen Drehstellung und/oder des Werkstückmaterials ausgewählt wird.

Es besteht die Möglichkeit, dass die in den mehreren Relativpositionen zwischen Messobjekt, Strahlungsquelle und/oder Detektor, vorzugsweise unterschiedlichen Vergrößerungen aufgenommenen Durchstrahlungsbilder zunächst je Kombination der Relativpositionen zu einem Volumendatensatz rekonstruiert werden, wobei sich diese teilweise überlappen können, um anschließend in einem gemeinsamen Raster im Raum dargestellt zu werden und auswertbar zu sein.

Bevorzugterweise werden in zumindest einer der mehreren Relativpositionen zwischen Messobjekt, Strahlungsquelle und/oder Detektor, vorzugsweise der mit höherer Vergrößerung, ein Teil des Werkstücks in zumindest einer Drehstellung nicht vollständig auf dem Detektor abgebildet, wobei dieser Teil des Werkstücks den verfügbaren Messbereich senkrecht zur virtuellen Drehachse verlässt, und die in den aufgenommenen Durchstrahlungsbildern fehlenden Messwerte aus den Messwerten der Durchstrahlungsbilder, vorzugsweise gleicher Drehstellung, errechnet, vorzugsweise durch Resamplingverfahren und/oder Interpolationsverfahren und/oder Extrapolationsverfahren.

Dabei kann die Darstellung und Auswertung im gemeinsamen Raster im Raum unter Berücksichtigung der Positionen von Messobjekt, Strahlungsquelle und/oder Detektor erfolgen, wobei insbesondere die Ermittlung des gemeinsamen Rasters im Raum anhand der Volumendaten erfolgt, die aus der Messung mit der höchsten Vergrößerung erzeugt wurden.

Die Möglichkeit ist gegeben, dass die Messwerte, vorzugsweise Grauwerte für das gemeinsame Raster durch Merging und/oder Resamplingverfahren, vorzugsweise unter Verwendung von Interpolationsverfahren aus den ursprünglichen Messdaten ermittelt werden, wobei in Überlappungsbereichen vorzugsweise eine gewichtete Mittelung der Messwerte erfolgt, wobei vorzugsweise der Gewichtung in Abhängigkeit zum Abstand zu den Überlappungsgrenzen erfolgt.

Bevorzugterweise wird durch die verschiedenen Relativpositionen zwischen Messobjekt, Strahlungsquelle und/oder Detektor ein Messbereich erzeugt, der größer als der durch einen fest stehenden Detektor abgedeckte Messbereich ist, indem vorzugsweise eine Relativbewegung zwischen Messobjekt und zumindest dem Detektor in zumindest einer nahezu senkrecht zur Abbildungsachse liegenden Richtung erfolgt.

Eine Anordnung zur Bestimmung von Strukturen und/oder Geometrie eines Objektes mittels eines Messsystems, vorzugsweise computertomographischen Messsystems, bestehend aus zumindest einer Strahlungsquelle, zumindest einem Strahlungsdetektor und zumindest einer Drehachse, zeichnet sich dadurch aus, dass das Werkstück, mithilfe einer Kombination aus rotatorischer und translatorischer Relativbewegung zwischen Werkstück und Detektor, um eine von der physikalischen Drehachse verschiedene Drehachse drehbar ist.

Dabei kann die physikalische Drehachse in zumindest einer translatorischen Richtung verstellbar sein und/oder das Messobjekt in zumindest einer translatorischen Richtung verstellbar auf der physikalischen Drehachse angeordnet sein und/oder der Detektor in zumindest einer translatorischen und oder rotatorischen Achse verstellbar sein.

Auch besteht die Möglichkeit, dass die physikalische Drehachse in zwei translatorischen Richtungen verstellbar ist, wobei die erste Richtung nahezu senkrecht zur Detektorebene verläuft und die zweite Richtung nahezu senkrecht zur Richtung der physikalischen Drehachse und nahezu senkrecht zur Normalen der Detektorebene verläuft.

Ferner sieht die Erfindung vor, dass die physikalische Drehachse nahezu senkrecht zur Detektorebene verstellbar ist und der Detektor in zumindest einer in der Detektorebene verlaufenden Richtung verstellbar ist, die nahezu senkrecht zur Richtung der physikalischen Drehachse verläuft, und vorzugsweise der Detektor um eine Achse drehbar ist, die nahezu parallel zur Drehachse verläuft.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: eine CT-Messanordnung in Prinzipdarstellung,
- Fig. 2: eine Messanordnung mit einem Werkstück in zwei verschiedenen Stellungen,
- Fig. 3: eine Prinzipdarstellung des CT-Detektors gemäß Fig. 2,
- Fig. 4: Kennlinien von Pixeln oder Gruppen von Pixeln in prinzipieller Darstellung,
- Fig. 5: den Intensitätsverlauf gemessener Strahlung in Abhängigkeit des ein Werkstück durchdringenden Orts,
- Fig. 6: Ortskoordinaten eines Werkstücks entsprechend der Fig. 5,
- Fig. 7: eine Prinzipdarstellung einer CT-Messanordnung mit dem Werkstück gemäß Fig. 6,
- Fig. 8: eine weitere Prinzipdarstellung einer CT-Messanordnung mit einem Werkstück, insbesondere zur Berücksichtigung der der Taumelbewegungen bei der Drehung des Messobjektes und Verlagerung des Brennfleckes der Röntgenröhre,
- Fig. 9: eine weitere Ausführungsform eines Koordinatenmessgerätes,
- Fig. 10: eine weitere Ausführungsform eines Koordinatenmessgerätes,
- Fig. 11: einen Computertomografie-Sensor in Prinzipdarstellung,
- Fig. 12: einen prinzipiellen Verlauf einer Intensitätsverteilung in Abhängigkeit von durchstrahlter Länge am Stützpunkt,
- Fig. 13: eine Messanordnung mit einem Werkstück in zwei verschiedenen Stellungen,
- Fig. 14: eine erste Ausführungsform einer Anordnung eines um eine virtuelle Drehachse drehbaren Objekts,
- Fig. 15: eine zweite Ausführungsform einer Anordnung eines um eine virtuelle Drehachse drehbaren Objekts,
- Fig. 16: eine erste Anordnung des Werkstücks zur Messung dessen in seiner Gesamtheit bzw. eines Details von diesem und
- Fig. 17: eine Anordnung zur kompletten Messung eines Werkstückes in zwei nacheinander aufzunehmenden Messungen in gleicher Vergrößerung.

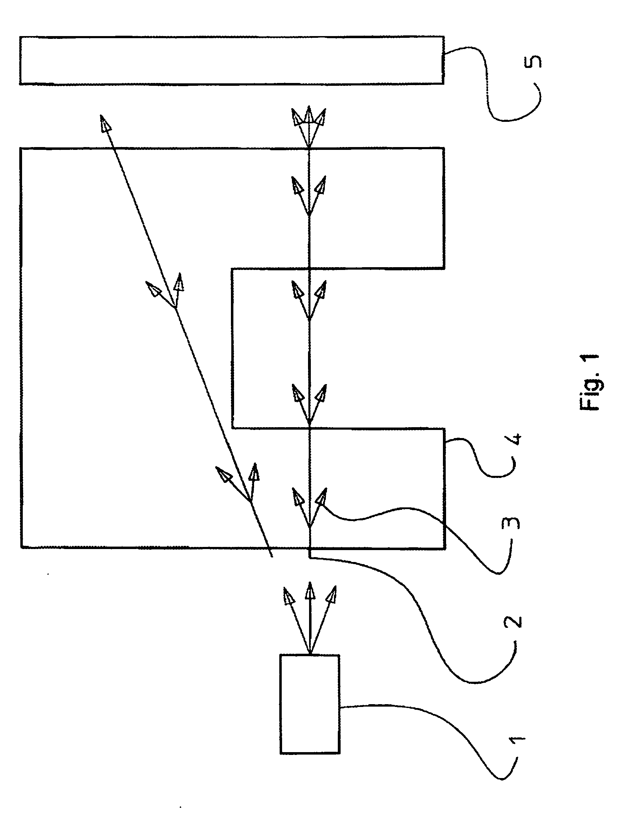

In der Fig. 1 ist rein beispielhaft und prinzipiell eine CT Messanordnung dargestellt, die Teil eines Koordinatenmessgeräts sein sollte, um Werkstücke 4 zu messen. Die Anordnung umfasst eine Röntgenquelle 1 und einen Pixel aufweisenden Röntgendetektor 5, zwischen denen das zu messende Werkstück bzw. Bauteil 4 angeordnet ist. Die die Röntgenquelle 1 verlassende Röntgenstrahlung 2 durchdringt das Bauteil 4 dabei auf unterschiedlichen Wegen, wobei an den Grenzflächen des Bauteils 4 - wie auch innerhalb des Bauteils 4 - Streustrahlungen oder anderwertige Artefakte entstehen können, die abhängig von der in der Strahlungsrichtung vorliegenden Geometrie der Strahlungslängen unterschiedlich auftreten.

Um bei der CT Messung auftretende Artefakte wirksam zu korrigieren, ist nun vorgesehen, dass für die Korrektur der Messwerte der einzelnen Pixel oder Gruppen von Pixeln des eingesetzten CT Detektors, also des Röntgendetektors 5 unterschiedliche Kennlinien verwendet werden. Dabei werden zur Bestimmung der einzelnen Kennlinien die unterschiedlichen messtechnischen Eigenschaften der einzelnen Pixel oder Gruppen von Pixeln und/oder Artefakte bei der computertomografischen Abbildung ermittelt. In den Kennlinien werden die Einflüsse durch Artefakte berücksichtigt, indem die den einzelnen Pixeln oder Gruppen von Pixeln zugeordneten Durchstrahlungslängen und/oder die Geometrie des Werkstücks 4 in den verschiedenen Drehstellungen zur Aufnahme der verschiedenen Projektionsdaten während der CT Messung bestimmt wird.

Die Bestimmung der Durchstrahlungslängen und/oder der Geometrie des Werkstücks 4 in den verschiedenen Drehstellungen kann anhand von nahezu vollständig vorliegenden Projektionsdaten oder anhand eines CAD Modells erfolgen.

Zur Korrektur von Artefakten aus den zuvor bestimmten Durchstrahlungslängen und/oder der in der jeweiligen Durchstrahlungsrichtung vorliegenden charakteristischen Geometrie werden eine oder mehrere Parameter abgeleitet, die sodann in den Kennlinien berücksichtigt werden.

Insbesondere werden die Parameter aus der charakteristischen Geometrie abgeleitet, indem aus der Geometrie und/oder Materialabfolge die durchstrahlten Strecken je Materialart und Anordnung erfasst werden und hieraus auf die Ausbildung von Artefakten wie Streustrahlungs- und Strahlaushärtungsartefakten geschlussfolgert wird.

Alternativ können die Parameter aus der charakteristischen Geometrie abgeleitet werden, indem aus der Geometrie und/oder Materialabfolge eine gewichtete mittlere Durchstrahlungslänge der einzelnen Materialabschnitte oder ein anderweitig analytisch gebildetes Kontrastverhältnis, z. B. mit Hilfe von Simulation ermittelt wird und hieraus auch die Ausbildung von Artefakten wie Streustrahlungs- und Strahlaushärtungsartefakten geschlussfolgert wird. Dabei sollten auch unterschiedliche Korrekturkennlinien in Abhängigkeit von der Drehstellung und/oder Position des Werkstücks, also des Bauteils 4 ermittelt und verwendet werden.

Die Auswahl und Zuordnung der jeweiligen Kennlinie für die einzelnen Detektorpixel und/oder Gruppen von Pixeln des Röntgendetektors 5 in den jeweiligen Drehstellungen und der Position des Werkstücks 4 erfolgt durch Ausrichtung zum Werkstück.

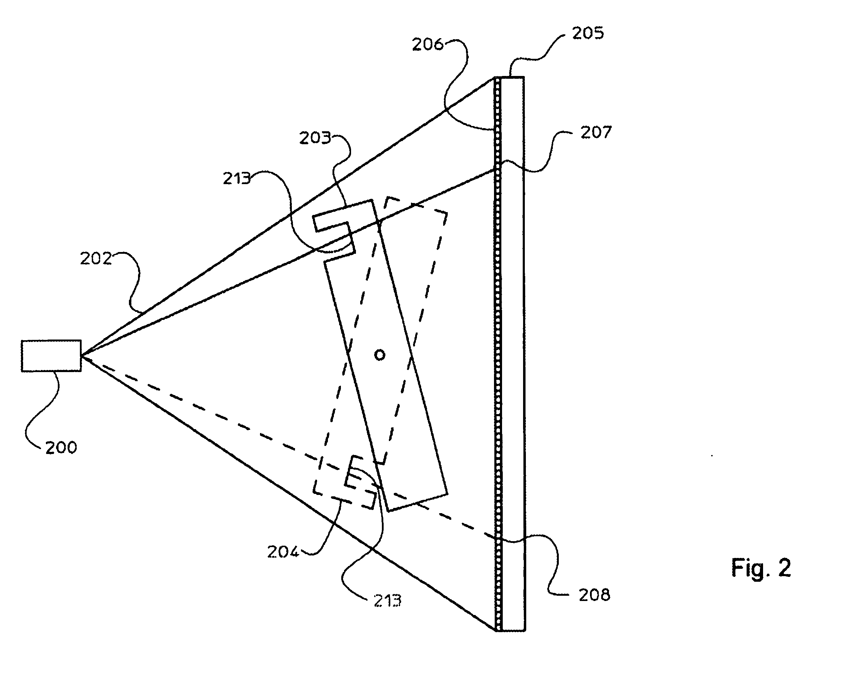

In Fig. 2 ist rein prinzipiell ein Werkstück 203 dargestellt, welches von der aus einer CT-Röhre (Röntgenquelle) 200 abgestrahlten Röntgenstrahlung 202 durchdrungen wird, wobei die Röntgenstrahlen 202 auf einem Detektor 205 auftreffen. In einer ersten Stellung des Werkstücks 203 werden Röntgenstrahlen, die einen Bereich 213 des Werkstücks 203 durchdringen, von dem Detektorpixel (X, Y) 207 detektiert, während in einer zweiten abweichenden Stellung des Werkstücks 204 derselbe Bereich 213 durchstrahlt, jedoch von dem Pixel (X+N, Y+M) 208 detektiert wird. Das Detektorpixel (X, Y) 207 detektiert Röntgenstrahlung, die einen anderen Bereich des Werkstücks 203, 204 durchdrungen hat, welcher sich insbesondere in der durchstrahlten Länge und/oder der durchstrahlten Materialabfolge unterscheidet. Artefakte, welche von der durchstrahlten Länge und/oder Materialabfolge abhängen, wie beispielsweise Strahlaufhärtungs- oder Streustrahlungsartefakte, äußern sich damit in den verschiedenen Drehstellungen des Werkstücks unterschiedlich. Um diese Abhängigkeit zu berücksichtigen, ist erfindungsgemäß u. a. vorgesehen, dass unterschiedliche Kennlinien für die unterschiedlichen Pixel oder Gruppen von Pixeln, auch in unterschiedlichen Drehstellungen oder Positionen des Werkstücks ermittelt und berücksichtigt werden, welche den Zusammenhang zwischen durchstrahlter Bauteillänge und/oder Materialabfolge und detektierter Strahlungsintensität beschreiben.

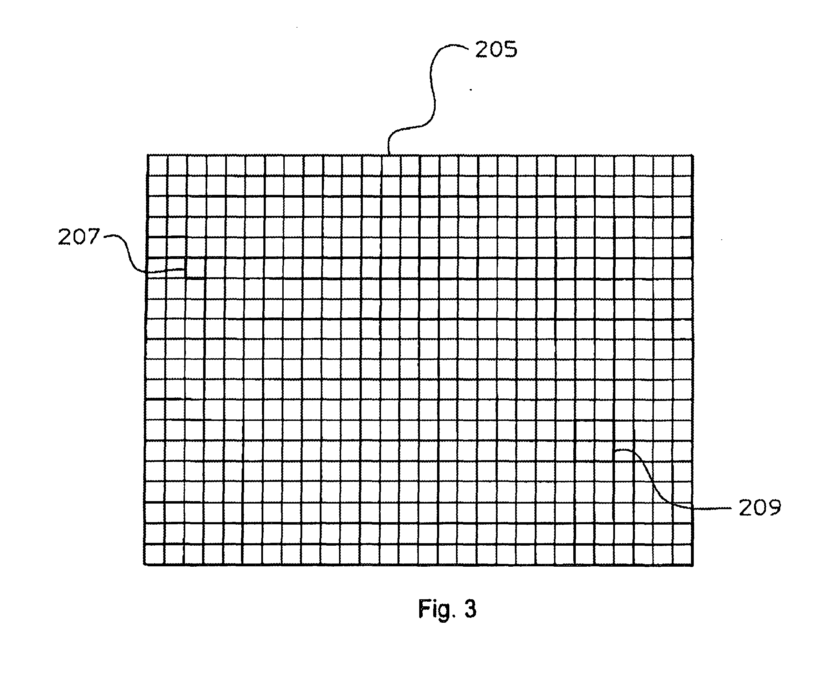

So zeigt Fig. 3 den CT-Detektor 205 und ein einzelnes Pixel 207 bzw. eine Gruppe von Pixeln 209. Für die einzelnen Pixel 207 oder Gruppen von Pixeln 208 können erfindungsgemäß unterschiedliche Kennlinien verwendet werden, die den Zusammenhang der durchstrahlten Bauteillänge L bzw. der Materialabfolge und der detektierten Strahlungsintensität I beschreiben.

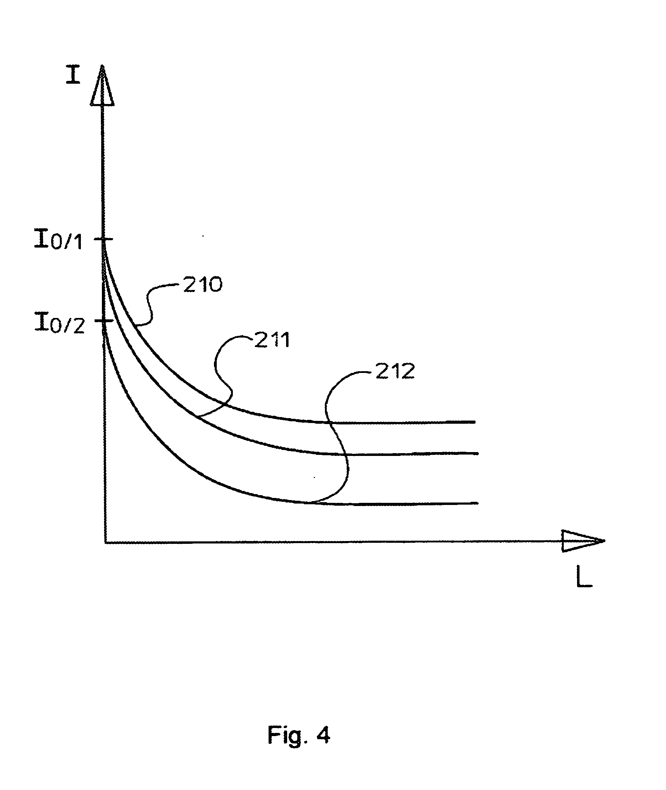

Beispielhaft sind in Fig. 4 drei unterschiedliche Kennlinien 210, 211 und 212 dargestellt. Diese können sich aufgrund der physikalischen Eigenschaften der einzelnen Pixel oder Gruppen von Pixeln und/oder der durchstrahlten Weglänge des Werkstücks bzw. der Materialabfolge innerhalb des Werkstücks zum Beispiel in der Anfangsintensität I0/1 bzw. 10/2 aber auch in ihrem Anstiegsverhalten oder der Linearität unterscheiden.

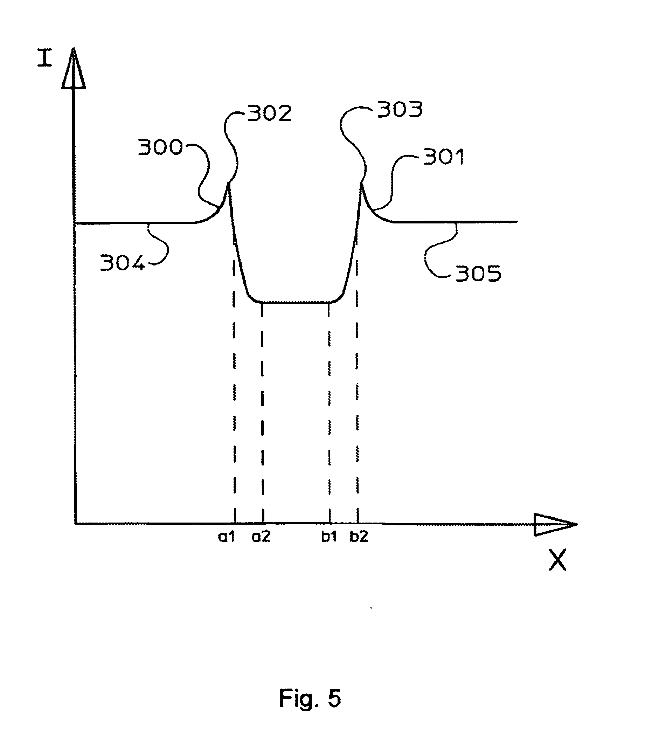

Anhand der Fig. 5 bis 7 soll beispielhaft erläutert werden, wie die Intensität einer Streustrahlung ermittelt wird, um diese sodann zurück zur Korrektur zu verwenden.

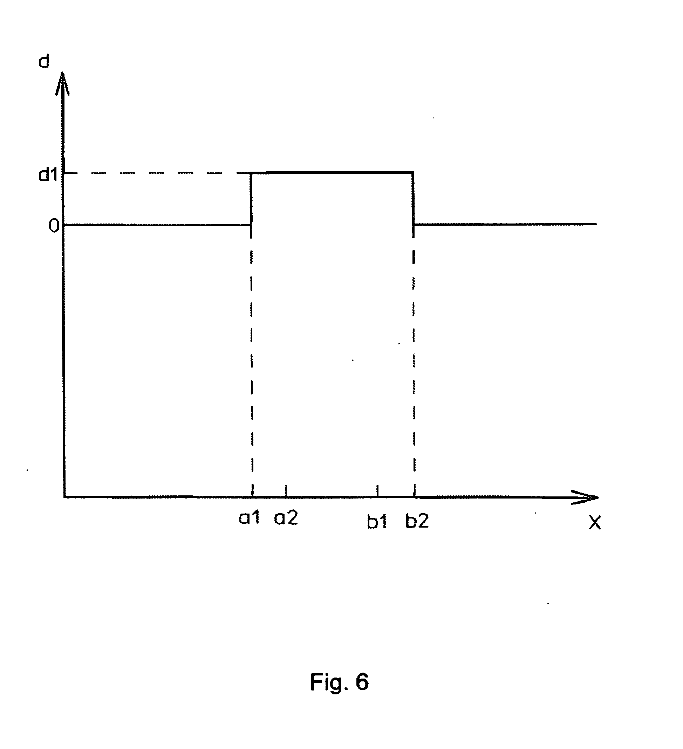

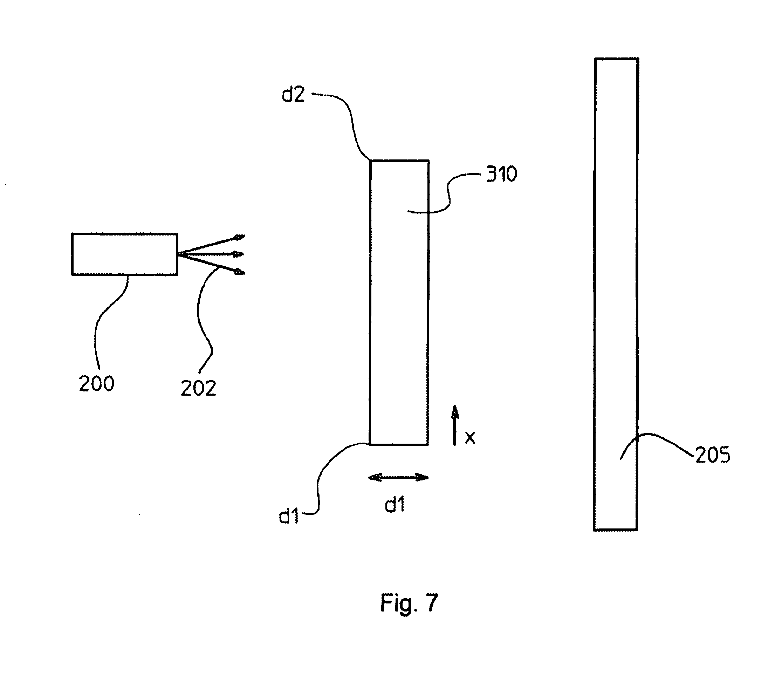

In Fig. 5 ist beispielhaft der Verlauf der Intensität I in Abhängigkeit des Orts x für einen Querschnitt durch ein einzelnes Durchstrahlungsbild eines Werkstücks 310 wiedergegeben, das in den Fig. 6 und 7 näher dargestellt ist. Das Werkstück 310 ist gemäß Fig. 7 zwischen der Röntgenquelle 200 und dem Detektor 205 entsprechend der zeichnerischen Darstellung angeordnet und wird von der Strahlung 202 der Röntgenquelle 200 durchdrungen. Zwischen den Orten a1 und b2 weist das Werkstück 310 in Durchstrahlungsrichtung die Dicke d1 auf. In Fig. 6 ist noch einmal die Dicke des Werkstücks 310 in Abhängigkeit des Orts x dargestellt. Entsprechend der Darstellung in Fig. 5 und 6 befinden sich die Kanten des Werkstücks 310 im Bereich zwischen dem Ort a1 und a2 beziehungsweise dem Ort b1 und b2. Zwischen beiden Kantenorten ist eine deutlich niedrigere Intensität vorhanden als in den Bereichen 304 und 305 weit außerhalb des Werkstücks 310. Außerhalb des Werkstücks 310, jedoch nahe der Kantenorte, befinden sich die Bereiche 300 und 301 mit erhöhter Intensität, welche beispielsweise durch Streustrahlungen ausgelöst werden können. Die Maxima 302 und 303 können verwendet werden, um die Intensität der Streustrahlung im Vergleich zur Intensität des ungeschwächten Röntgenstrahls aus den Bereichen 304 und 305 zu bestimmen. Detektorpixel die zwischen den Orten a1 und b2 angeordnet sind, können um die Streustrahlungsamplitude korrigiert, zum Beispiel vermindert, werden. Die Korrektur kann dabei auf alle Pixel gleichmäßig angewendet werden oder in Abhängigkeit der vorliegenden Durchstrahlungslängen beziehungsweise der durchstrahlten Strecke je Materialart.

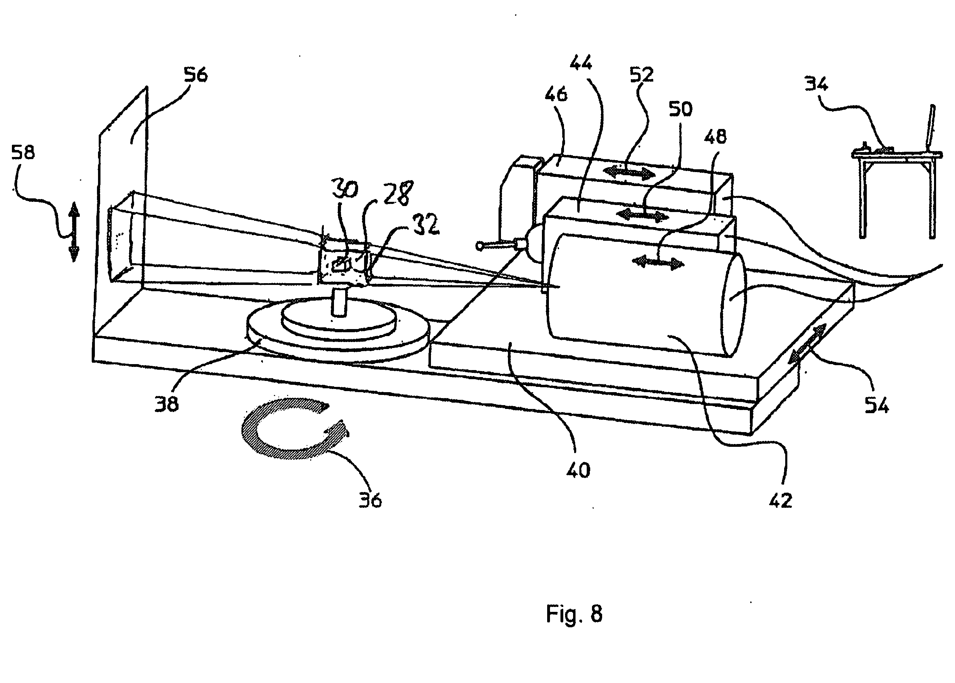

Ein Multisensor-Koordinatenmessgerät zur Berücksichtigung der Taumelbewegungen bei der Drehung des Messobjektes oder Verlagerungen zwischen der Röntgenröhre, insbesondere des Brennflecks der Röntgenröhre, und dem Röntgendetektor ist rein prinzipiell der Figur 8 zu entnehmen, mit dem eine vollständige dimensionelle Messung eines Werkstücks 28 durchgeführt werden kann, das z. B. aus einem Kern 30 und diesen umgebender Umhüllung 32 besteht. Die Materialien von Kern 30 und Umhüllung 32 weichen in ihren Dichten ab. So kann der Kern 30 z. B. aus Metall und die Umhüllende 32 aus Kunststoff oder einem sonstigen leichteren Werkstoff bestehen.

Das Koordinatenmessgerät ist mit einer Auswerteeinheit 34 mit Steuerungs-, Hard- und Software sowie Speichereinheit zum Speichern von Messpunkten verbunden. Ferner ist eine Ein- und Ausgabeeinheit für einen Bediener vorhanden.

Das Werkstück 28 wird auf einem drehbaren Tisch 38 angeordnet. Auf einem Träger 40 sind eine Röntgenquelle 42 sowie beispielhaft ein taktiler Sensor 44 sowie ein Laserliniensensor 46 angeordnet, die entlang Verfahrachsen auf dem Träger 40 verschiebbar angeordnet sind (Doppelpfeile 48, 50, 52). Der Träger selbst ist entlang einer senkrecht zu den Verfahrachsen 48, 50, 52 verlaufenden Achsen 54 verstellbar.

Auf der im Bezug auf die Röntgenquelle 42 gegenüberliegenden Seite des Werkstückes 28 ist ein Röntgendetektor 56 angeordnet. Dabei kann in Abhängigkeit von den Messaufgaben der Detektor 56 senkrecht zu den Verfahrachsen 48, 50, 52, 54 und gegebenenfalls parallel zu der Verfahrachse 54 des Trägers 40 verstellbar sein.

In diesem Ausführungsbeispiel wird das Werkstück 28 von der von der Röntgenquelle 32 emittierten Röntgenstrahlung durchstrahlt. Die das Werkstück 28 durchsetzende Strahlung wird sodann vom Detektor 56 erfasst. Um die zur Rekonstruktion dienenden Durchstrahlungsbilder in den verschiedenen Drehstellungen des Werkstücks 28 eindeutig im Raum zueinander zuzuordnen und somit Messungenauigkeiten durch etwaige Taumelbewegungen bei der Drehung des Werkstücks 28 oder Verlagerungen zwischen der Röntgenquelle bzw. Röntgenröhre 42, insbesondere dessen Brennflecks, und dem Röntgendetektor 56 aufzuschließen bzw. in einem Umfang zu minimieren, dass die gewünschte Messgenauigkeit sichergestellt ist, werden Vorab-Informationen berücksichtigt, mittels der die Durchstrahlungsbilder beim eigentlichen Messvorgang korrigiert werden. Hierzu werden zunächst eine oder mehrere Vorab-Durchstrahlungsbilder des Werkstücks 28 oder Teile dieses aufgenommen. Um Drifterscheinungen bei den VorabAufnahmen zu minimieren, werden nur einige wenige Durchstrahlungsbilder in den wenigen verschiedenen Stellungen aufgenommen. Durch einen Vergleich zwischen den vorab aufgenommenen Durchstrahlungsbildern bzw. Teilen davon und den während der Messung aufgenommenen Durchstrahlungsbildern bzw. Teilen davon können z. B. mit Hilfe von Korrelationsverfahren eine Verschiebung oder Skalierungsabweichungen erkannt und korrigiert werden. Dies kann z. B. durch Re-Sampling-Verfahren oder Positionierung der Röntgenquelle 42 relativ zum Röntgendetektor 56 und/oder dem Werkstück 28 erfolgen.

Zur Messung eingesetzte Durchstrahlungsbilder, für die kein Vorab-Durchstrahlungsbild vorliegt, werden mit Hilfe von Interpolations-Verfahren aus vorab aufgenommenen Durchstrahlungsbildern benachbarter Drehstellungen des Werkstücks 28 korrigiert. Insbesondere ist vorgesehen, dass 20 bis 70 Vorab-Durchstrahlungsbilder aufgenommen werden im Vergleich zu 100 bis 1.600 Durchstrahlungsbildem, die zur Messung des Werkstücks 28 typischerweise erforderlich sind.

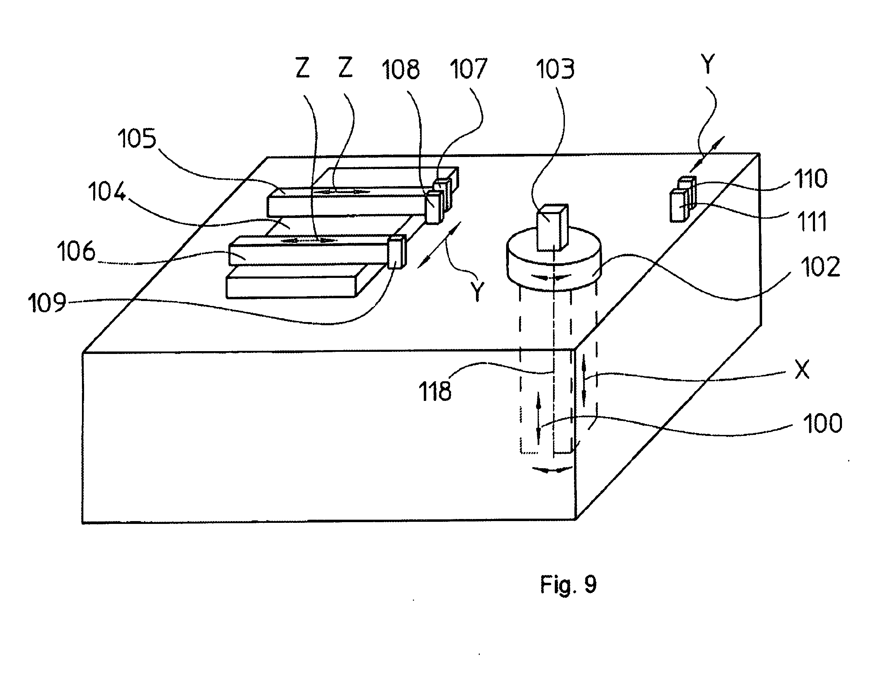

In der Fig. 9 ist rein prinzipiell ein Koordinatenmessgerät für den gegebenenfalls kombinierten Einsatz von Röntgensensorik und optischer und/oder taktiler Sensorik dargestellt.

Auf einer parallel zur X-Achse des Koordinatenmessgeräts verlaufenden Achse 118 ist ein Drehtisch 110 angeordnet. Auf diesem befindet sich ein Messobjekt 103 und kann somit um die Drehachse 118 rotiert werden und in X-Richtung durch die Achse 118 verschoben werden (Doppelpfeil). Auf einem parallel zu Y-Achse verlaufenden Schieber 104 sind zwei parallel zur Z-Achse verlaufende Achsen 105, 106 angeordnet. Auf der mechanischen Achse 105 befindet sich ein Sensor 107 für Röntgenstrahlung und ein Bildverarbeitungssensor 108. Auf der mechanischen Achse 106 befindet sich zusätzlich ein taktiler Sensor 109. Gegenüber dem Röntgensensor 107 ist eine Röntgenquelle 110 angeordnet, die wahlweise in Y-Richtung bewegbar oder fest angebracht sein kann. Gegenüber der Bildverarbeitungssensorik 108 befindet sich eine Durchlichtquelle 111. Die mechanischen Achsen bzw. Schieber, die entlang der X-, Y- bzw. Z-Achse des Koordinatenmessgerätes verlaufen, sind so ausgelegt, dass die in bzw. auf dem Koordinatenmessgerät installierten Sensoren jeweils den gesamten Messbereich auf dem Drehtisch 102 überdecken können.

Durch die Integration der Computer-Tomographie (CT) in ein Multisensor-Koordinatenmessgerät werden völlig neue Möglichkeiten geschaffen. Eine schnelle, zerstörungsfreie Komplettmessung mit der Tomographie wird mit hochgenauen Messungen von Funktionsmaßen mit taktiler oder optischer Sensorik vereint. Dabei kann vorgesehen sein, dass die Röntgensensorik (Sensor, Strahlenquelle) entsprechend der zweiten Sensorik (z. B. Bildverarbeitungssensor, Durch- oder Auflichtstrahlenquelle oder taktiler Sensor gegebenenfalls mit zugeordnetem Bildverarbeitungssensor) in dem Koordinatenmessgerät positionierbar ist, dass also gleichwertig zur zweiten Sensorik die Röntgensensorik angeordnet ist. Dabei kann die Röntgensensorik mit zumindest der taktilen Sensorik und/oder der optischen Sensorik auf einer gemeinsamen mechanischen Achse angeordnet bzw. auf einer separaten mechanischen Achse angeordnet sein, die in analoger Weise wie die mechanischen Achsen für die taktile und/oder optische Sensorik arbeitet. Die Auslegung des Fig. 9 zu entnehmenden Koordinatenmessgerätes als Multisensorkoordinatenmessgerät ist nicht zur Verwirklichung aller Teile der erfindungsgemäßen Lehre erforderlich. Vielmehr ist allein sicherzustellen, dass eine Computertomografie durchgeführt werden kann.

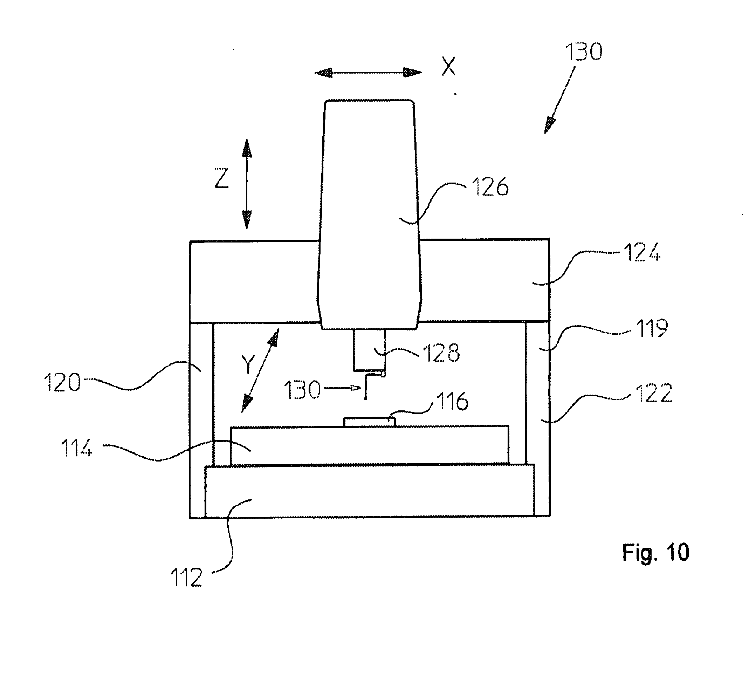

In Fig. 10 ist rein prinzipiell eine weitere Ausführungsform eines Multisensor-Koordinatenmessgerätes 130 dargestellt. Die Sensoren können wahlweise montiert oder demontiert werden oder über entsprechende Sensorwechselsysteme auch während des Betriebes automatisch ein- und ausgewechselt werden. Selbstverständlich wird die Erfindung nicht verlassen, wenn eine entsprechende Anzahl von ausgewählten Sensoren fest auf dem Gerät montiert gelassen wird, um in dieser Konfiguration Objekte zu messen.

Das hinlänglich bekannte und noch einmal in der Fig. 10 wiedergegebene Prinzip eines Koordinatenmessgerätes 130 umfasst einen z. B. aus Granit bestehenden Grundrahmen 112 mit Messtisch 114, auf dem ein zu messendes Objekt 116 positioniert wird, um dessen Oberflächeneigenschaften zu messen.

Entlang dem Grundrahmen 112 ist ein Portal 119 in Y-Richtung verstellbar. Hierzu sind Säulen oder Ständer 120, 122 gleitend am Grundrahmen 112 abgestützt. Von den Säulen 120, 122 geht eine Traverse 124 aus, entlang der ein Schlitten verfahrbar ist, der seinerseits eine Pinole oder Säule 126 aufnimmt, die in Z-Richtung verstellbar ist. Von der Pinole 126 bzw. gegebenenfalls einer mit der Pinole 126 verbundenen Wechselschnittstelle 128 geht ein Sensor 130 aus, der als taktiler Sensor ausgebildet sein kann, der dann, wenn die Pinole 126 einen Bildverarbeitungssensor enthält, taktil-optisch misst. Insoweit wird jedoch auf hinlänglich bekannte Techniken verwiesen, genauso wie in Bezug auf weitere zum Einsatz gelangende Sensoren wie Laserabstandssensor, Weißlichtinterferometer, Bildverarbeitungssensoren, Röntgensensorik oder chromatischer Fokussensor oder konfokal Scanning-Messkopf, ohne dass hierdurch eine Einschränkung der erfindungsgemäßen Lehre erfolgt. Der bzw. die Sensoren werden entsprechend der Messaufgabe ausgewählt und eingesetzt, um das Koordinatenmessgerät 130 für die jeweilige Messaufgabe optimal zu konfigurieren. Gleichzeitig werden Probleme gelöst, die bei üblichen Koordinatenmessgeräten auftreten.

Um das Koordinatenmessgerät 130 mit dem geeigneten Sensor nutzen zu können, kann das Koordinatenmessgerät einen Sensorwechsler aufweisen. Somit können mehrere Sensoren jeweils wahlweise über eine Wechselschnittstelle mit dem Koordinatenmessgerät 130 versehen und von Hand oder durch automatisches Abholen von einer Parkstation ausgewechselt werden.

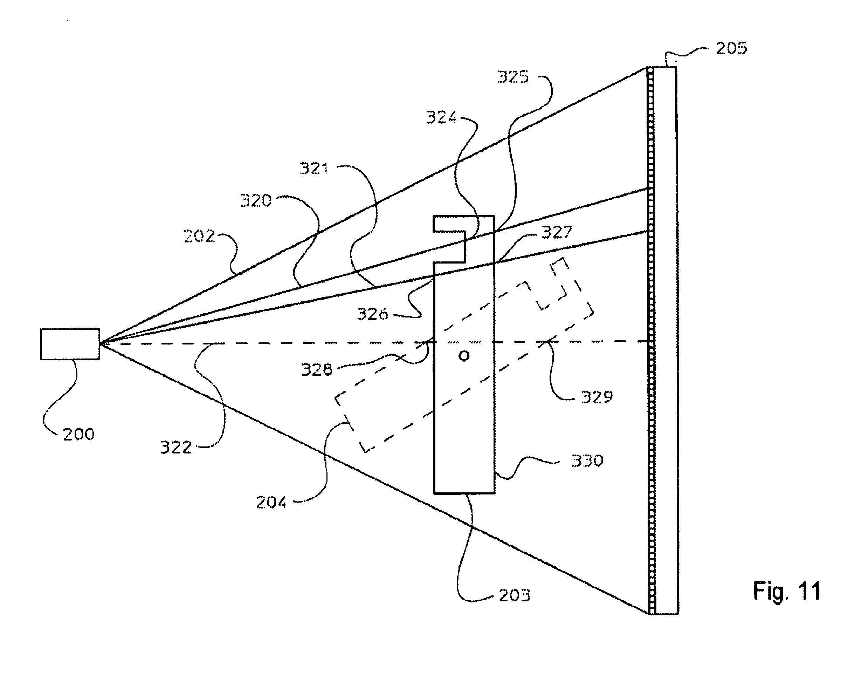

Fig. 11 zeigt eine prinzipielle Darstellung eines Computertomografie-Sensors. Die die Röntgenquelle 200 verlassende Strahlung 202 durchdringt dabei ein Werkstück 203 und trifft danach auf einen Detektor 205. Um den erfindungsgemäßen Zusammenhang zwischen den von dem Detektor 205 ermittelten Schwächungswerten und der korrespondierenden durchstrahlten Längen des Werkstücks bzw. Bauteils 203 herzustellen, werden Durchstoßpunkte 324, 325 für den Strahl 320 beispielsweise mit einem optischen oder taktilen Sensor gemessen. Weitere Stützwerte für die Konekturkennlinie, also andere Durchstrahlungslängen, können beispielsweise unter Nutzung eines Strahls 321 und der Messung von Durchstoßpunkten 326, 327 oder auch unter Verwendung eines Strahls 322 und von Durchstoßpunkten 328, 329 durch das Messobjekt bei veränderter Drehlage 204 ermittelt werden.

Eine alternative Möglichkeit zur Bestimmung der Durchstrahlungslänge zwischen Durchstoßpunkten, z. B. 326 und 327, besteht in der Ermittlung der Koordinaten der Durchstoßpunkte durch mathematische Verknüpfung von taktil und/oder optisch gemessenen Elementen, z. B. Ebenen oder Zylindern, und/oder Handelementen. Beispielsweise kann die Koordinate des Durchstoßpunktes 327 durch Schneiden einer taktil und/oder optisch gemessenen Ebene 330 mit einer Handgeraden ermittelt werden, welche entlang des Strahls 321 verläuft.

Die zwischen diesen Durchstrahlungslängen auftretenden Längen können durch Interpolation ermittelt werden. Ebenso ist es möglich, größere oder kleinere Durchstrahlungslängen durch Extrapolation zu ermitteln und mit den Schwächungswerten des Detektors in funktionalen Zusammenhang zu bringen.

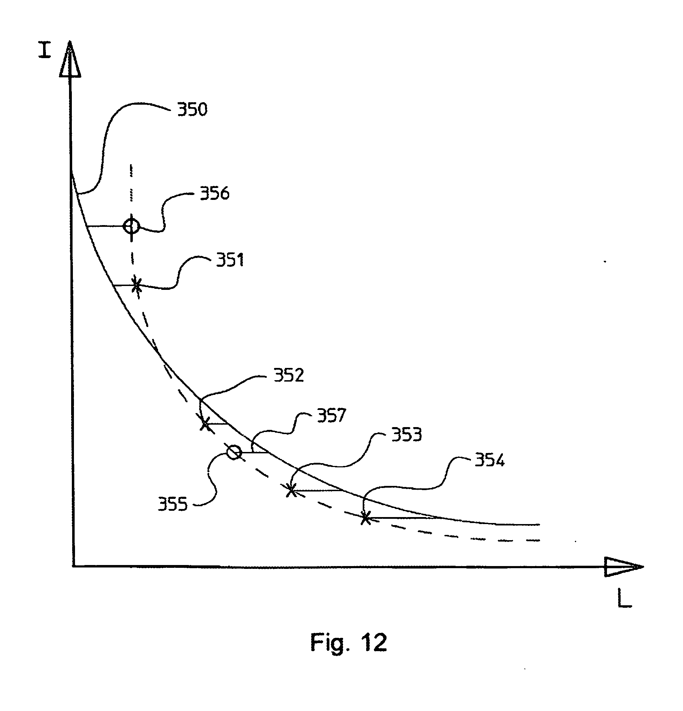

Fig. 12 zeigt dazu den Zusammenhang zwischen der durchstrahlten Länge L und der vom Detektor ermittelten Intensität 1. Ausgehend von einer analytisch oder in Form eines Look-up-Tables (LuT) vorliegenden Kennlinie 350 werden zunächst Korrekturwerte für die diskreten gemessenen Punkte 351 bis 354 als Differenzlänge zur vorhandenen Kennlinie bestimmt. Für zwischen diesen Stützpunkten liegende Intensitäten, beispielsweise jene, die durch den Punkt 355 charakterisiert wird, wird die Korrektur 357 durch Interpolation des Punktes 355 ermittelt. Gleiches gilt für außerhalb der Stützpunkte liegende Intensitäten, beispielsweise jene, die durch den Punkt 356 verläuft unter Anwendung von Extrapolationsverfahren. Die den einzelnen Intensitäten zugeordneten Korrekturwerte werden in Form von analytischen Funktionen oder Wertetabellen LuT hinterlegt und angewendet.

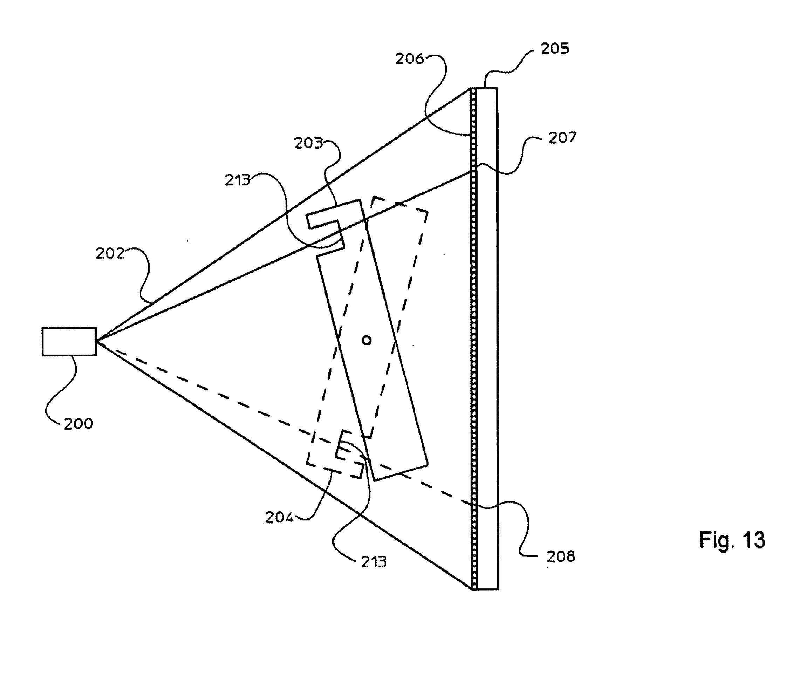

Anhand der Fig. 13, die identisch mit Fig. 2 ist, sollen weitere wesentliche Aspekte der erfindungsgemäßen Lehre zur Durchführung einer Computertomografie erläutert werden. So ist in Fig. 13 rein prinzipiell ein Objekt oder Werkstück 203 dargestellt, welches von einer aus einer CT-Röhre 200 emittierten Röntgenstrahlung 202 durchdrungen wird, wobei die Röntgenstrahlung 202 auf einen Detektor 205 auftrifft. In einer ersten vorab eingestellten Drehstellung des Werkstücks 203 durchdringt die vom Detektorpixel 207 des Detektors 205 empfangene Strahlung das Messobjekt 203 einen Bereich 213 und erzeugt einen entsprechenden charakteristischen Grauwert auf dem Detektorpixel 207. In weiteren Drehstellungen, z. B. einer Drehstellung 204, entstehen weitere charakteristische Grauwerte für die verschiedenen Detektorpixel, z. B. das Detektorpixel 207 oder 208. Wird in den verschiedenen Drehstellungen zumindest ein Bereich von 0 bis 90 Grad überdeckt, so sind die kürzeste und die längste Durchstrahlungslänge zumindest einmal in der Abbildung auf dem Detektor 205 enthalten. Dadurch wird ein hellstes und ein dunkelstes Pixel und daraus ein Kontrastwert berechnet bzw. ein Histogramm der Pixelgrauwerte zur statistischen Auswertung. Ist das hellste Pixel größer als ein vorgegebener Maximalwert, also das Bild beispielsweise teilweise übersteuert, so werden beispielsweise automatisch Parameter wie Strom der CT-Röhre 200 und/oder Integrationszeit verringert, um sodann erneut vorab Vorab-Durchstrahlungsbilder aufzunehmen.

Beim Auftreten von Pixeln unterhalb eines vorgegebenen Grenzwertes wird beispielsweise der Parameter der Anzahl der Bildmittelungen automatisch erhöht, wodurch sich der Signalrauschabstand erhöht, also verbessert, um sodann erneut Vorabdurchstrahlungsbilder aufzunehmen.

Befindet sich beispielsweise eine sehr große Anzahl von sehr dunklen Pixeln im ausgewerteten Bildbereich, so erfolgt eine Erhöhung der Beschleunigungsspannung der CT-Röhre 200 automatisch und danach werden erneut Vorabbilder aufgenommen. Das umgekehrte Vorgehen wird bei einer sehr hohen Anzahl von sehr hellen Pixeln durchgeführt.

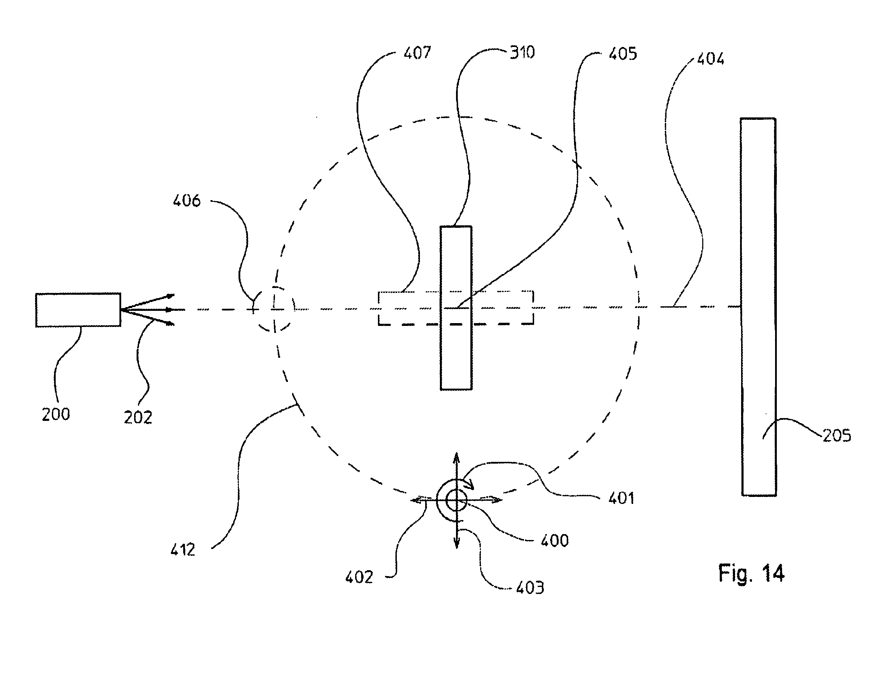

Figur 14 zeigt eine Röntgenstrahlquelle 200 und eine von ihr ausgehende Messstrahlung 202, einen Röntgendetektor 205 und ein zwischen diesen angeordnetes Werkstück 310 in einer ersten Messstellung, welches mit der physikalischen Drehachse 400 fest verbunden ist. Die erste Messstellung wird eingenommen, indem durch Bewegung der physikalischen Drehachse 400 in Richtung des Pfeils 403 (in der Zeichnung vertikal verlaufend) die virtuelle Drehachse 405, die etwa der Symmetrieachse des Werkstücks 310 entspricht, etwa mittig zum Detektor 205 ausgerichtet wird, sich also mit der mittleren Strahlachse 404 etwa schneidet. Durch Drehung der physikalischen Drehachse 400 (in der Zeichnung um eine die Zeichenebene senkrecht schneidende Achse) in Richtung des Pfeils 401 wird in mehreren, typischerweise 100-1600 Schritten bis hin zu 360° Durchstrahlungsbilder des Werkstücks 310 aufgenommen. Damit in allen Drehstellungen das Werkstück auf dem Detektor komplett abgebildet wird, wird gleichzeitig die das Werkstück 310 tragende Drehachse 400 in Richtung der Pfeile 402 (in der Zeichnung horizontal verlaufend) und 403 so bewegt, dass die virtuelle Drehachse 405 in allen Drehstellungen die gleiche Lage zum Detektor 205 einnimmt. Für die 90°-Stellung beispielhaft ist die Position der physikalischen Drehachse 406 und des Werkstücks 407 dargestellt. Die Bewegung der physikalischen Drehachse in Richtung der Pfeile 402 und 403 erfolgt durch einen Kreuztisch, der Teil eines Koordinatenmessgerätes ist, in welchem die Anordnung eingebracht ist, auf der Kreisbahn 412.

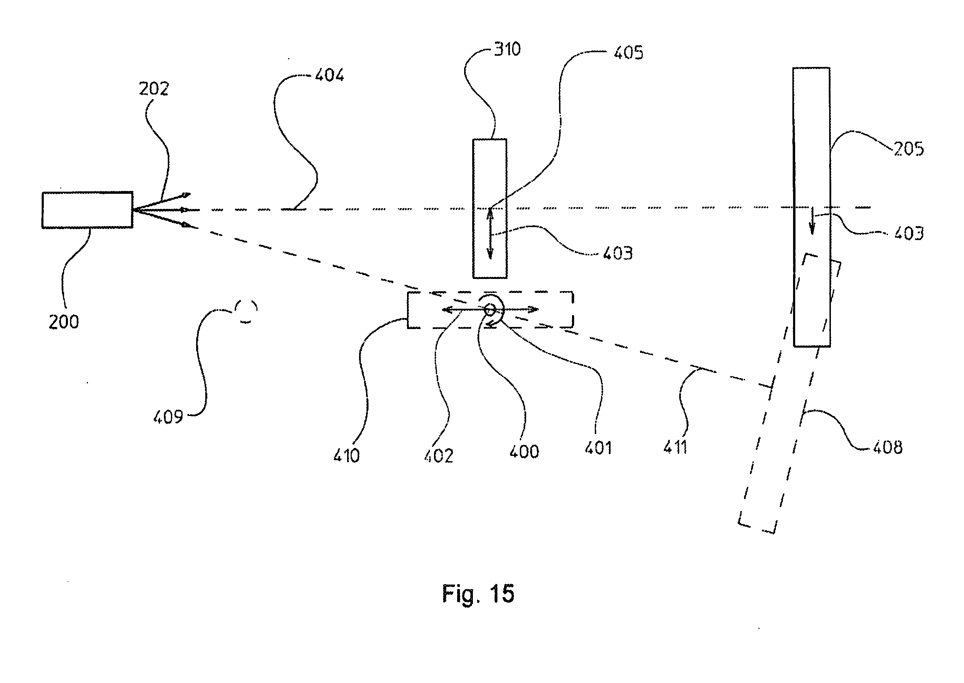

In Figur 15 wird die physikalische Drehachse 400 nun nur noch in Richtung des Pfeils 402 verfahren, während gleichzeitig der Detektor 205 in Richtung des Pfeils 403 bewegt und vorzugsweise zusätzlich um eine Achse parallel zur physikalischen Drehachse 400 gekippt wird. Dabei schneidet wiederum die virtuelle Drehachse 405 die mittlere Strahlachse 404. Für die 90"-Stellung beispielhaft ist die veränderte Position der Drehachse 409, des Werkstücks 410 und des Detektors 408 dargestellt. Die virtuelle Drehachse befindet sich nun an der Startposition der physikalischen Drehachse 400 und schneidet wiederum die nun mit dem Detektor 205 wandernde, also verdrehte mittlere Strahlachse 411. Im weiteren Verlauf der Drehung der physikalischen Drehachse 400 bewegt sich die virtuelle Drehachse 405 in Richtung des Pfeils 403.

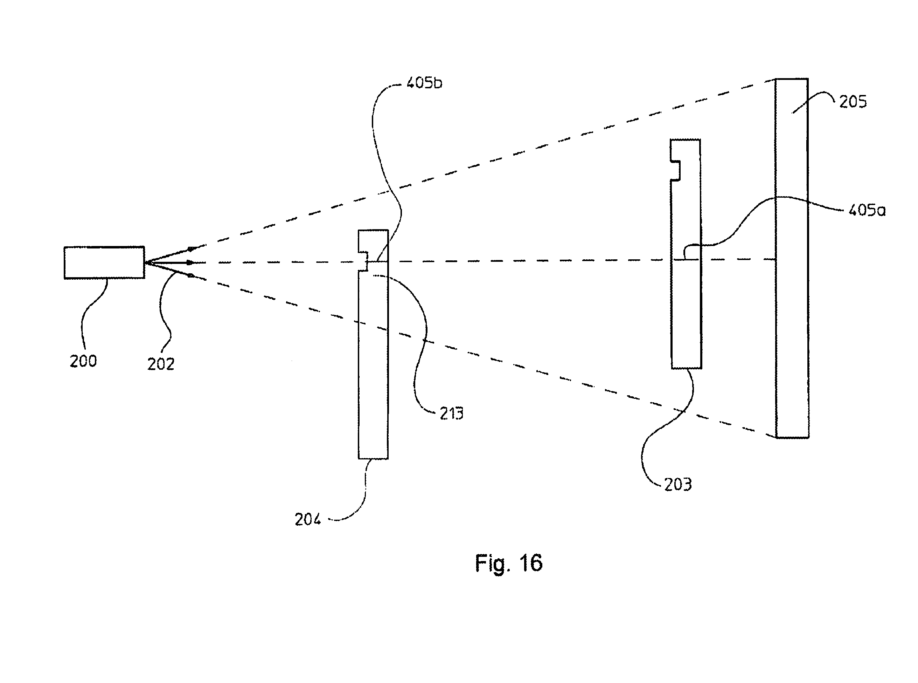

Figur 16 zeigt das Werkstück 203 in einer ersten Position zur Erfassung der kompletten Geometrie und in einer zweiten Stellung 204 zur hoch aufgelösten Bestimmung eines Details 213 in hoher Vergrößerung. In der ersten Position erfolgt dabei die Drehung des Werkstücks 203 um die virtuelle Drehachse 405a (in der Zeichnung um eine die Zeichenebene senkrecht schneidende Achse) und das Werkstück wird in allen Drehstellungen vollständig auf dem Detektor 205 abgebildet. In der zweiten Position erfolgt die Drehung des Werkstücks 204 um die virtuelle Drehachse 405b (in der Zeichnung um eine die Zeichenebene senkrecht schneidende Achse). In dieser Stellung verlässt das Teil in zumindest einigen Drehstellungen den durch die Röntgenstrahlquelle 200 gebildeten Strahlbereich 202 in der Zeichenebene oder zumindest einer Ebene, die senkrecht von der virtuellen Drehachse 405b durchstoßen wird. Das Werkstück wird dadurch nicht in allen Drehstellungen vollständig auf dem Detektor 205 abgebildet. Die somit fehlenden Durchstrahlungswerte auf dem Detektor 205 werden dann aus der Messung in der ersten Position des Werkstücks 203 durch Resampling-Verfahren unter Zuhilfenahme von Interpolationsverfahren und/oder Extrapolationsverfahren ermittelt. Die Ergebnisse beider computertomographischer Messungen werden im Anschluss zusammenfassend ausgewertet, indem die rekonstruierten Grauwerte auf ein gemeinsames dreidimensionales Raster mit Hilfe z. B. von Resampling-Verfahren unter Zuhilfenahme von Interpolationsverfahren umgerechnet werden.

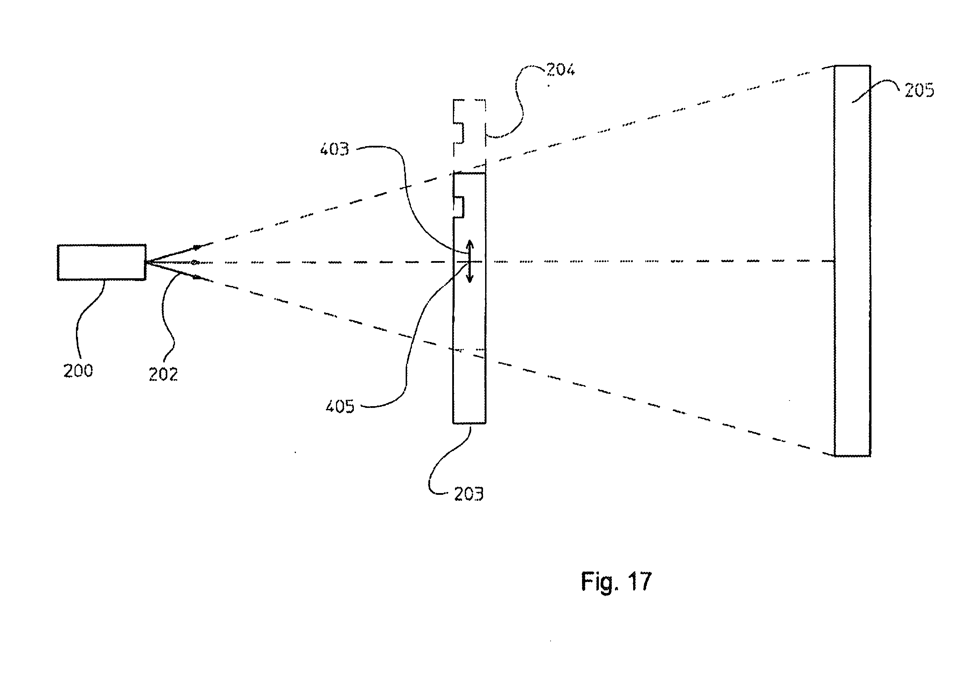

Figur 17 zeigt die gleiche Verfahrensweise wie Figur 16, wobei nun jedoch in annährend gleicher Vergrößerung aufgenommene sich teilweise überlappende Bereiche des Werkstücks 203 vereint werden, das in den Stellungen 203 und 204 nacheinander gemessen wird. Damit kann das Werkstück 203 vollständig erfasst werden, obwohl es größer als der Messbereich ist, der durch den Detektor 205 gebildet wird. Die virtuelle Drehachse 405 dreht sich dabei entweder um eine die Zeichenebene senkrecht schneidende Achse oder um den Pfeil 405 (in der Zeichnung vertikal verlaufend).

## Patentansprüche

1. Verfahren zur Bestimmung von Strukturen und/oder Geometrie eines Objektes wie Werkstücks mittels eines computertomographischen Messsystems, umfassend zumindest eine Strahlungsquelle, zumindest einen Strahlungsdetektor und zumindest eine Drehachse,
**dadurch gekennzeichnet,**
**dass** Aufnahmen in Form von Durchstrahlungsbildem, stammend aus verschiedenen Drehstellungen des Werkstücks, kombiniert werden, für die:
- das Werkstück, mithilfe einer Kombination aus rotatorischer und translatorischer Relativbewegung zwischen Werkstück und Detektor, um eine von der physikalischen Drehachse verschiedenen, resultierenden Drehachse gedreht wird und
- Messobjekt, Strahlungsquelle, Detektor mehrere Positionen relativ zueinander einnehmen.

2. Verfahren nach Anspruch 1,
**dadurch gekennzeichnet,**
**dass** die physikalische Drehachse bezüglich des Detektors und/oder der Strahlungsquelle nicht ortsfest ist, indem die physikalische Drehachse in zumindest einer translatorischen Richtung verstellt wird und/oder der Detektor in zumindest einer translatorischen Richtung und/oder zumindest einer rotatorischen Richtung verstellt wird.

3. Verfahren nach Anspruch 1,
**dadurch gekennzeichnet,**
**dass** der Detektor fest steht und die physikalische Drehachse in zwei translatorischen Richtungen verstellt wird, wobei die erste Richtung nahezu senkrecht zur Detektorebene verläuft und die zweite Richtung nahezu senkrecht zur Richtung der physikalischen Drehachse und nahezu senkrecht zur Normalen der Detektorebene verläuft.

4. Verfahren nach zumindest einem der vorhergehenden Ansprüche,
**dadurch gekennzeichnet,**
**dass** das Werkstück um eine bezüglich des Detektors und/oder der Strahlungsquelle nicht ortsfeste physikalische Drehachse gedreht wird, indem die physikalische Drehachse in einer translatorischen Richtung verstellt wird, die nahezu senkrecht zur Detektorebene verläuft, und der Detektor in einer in der Detektorebene verlaufenden Richtung verstellt wird, welche senkrecht zur Richtung der physikalischen Drehachse ist, und vorzugsweise der Detektor um eine Richtung gedreht wird, die nahezu parallel zur physikalischen Drehachse ist und/oder die Messergebnisse unter Berücksichtigung der bzgl. der Beleuchtung außermittigen Durchstrahlung des Werkstücks und/oder bzgl. der Beleuchtung vorhandenen Drehung des Detektors korrigiert werden.

5. Verfahren nach zumindest einem der vorhergehenden Ansprüche,
**dadurch gekennzeichnet,**
**dass** die von der physikalischen Drehachse verschiedene Drehachse die virtuelle Drehachse des Werkstücks, vorzugsweise Symmetrieachse ist.

6. Verfahren nach zumindest einem der vorhergehenden Ansprüche,
**dadurch gekennzeichnet,**
**dass** sich die physikalische Drehachse auf einer geschlossenen glatten Kurve, wie elliptischen Bahn, insbesondere Kreisbahn, um die virtuelle Drehachse oder auf einer Geraden, welche vorzugsweise senkrecht zur Detektorebene verläuft, bewegt.

7. Verfahren nach zumindest einem der vorhergehenden Ansprüche,
**dadurch gekennzeichnet,**
**dass** Strukturen und/oder Geometrien von rotationssymmetrischen Teilen und/oder Werkzeugen und/oder tomographierbaren Teilen bestimmt werden.

8. Verfahren nach zumindest einem der vorhergehenden Ansprüche,
**dadurch gekennzeichnet,**
**dass** eine Messung ohne vorheriges Ausrichten des Werkstücks zur physikalischen Drehachse erfolgt und während der rotatorischen Bewegung der physikalischen Drehachse eine translatorische Bewegung der physikalischen Drehachse und/oder des Detektors erfolgt, wobei die virtuelle Drehachse durch vor und/oder während der eigentlichen Messung erfolgtes Ausrichten, vorzugsweise mit Hilfe einer CNC-gesteuerten Koordinatenachse, stets mittig zum Detektor angeordnet bleibt.

9. Verfahren nach zumindest einem der vorhergehenden Ansprüche,
**dadurch gekennzeichnet,**
**dass** ein Steuerrechner die relative Lage der virtuellen Drehachse zur physikalischen Drehachse im Raum ermittelt und damit die Kombination aus translatorischen und rotatorischen Bewegungen steuert, indem
- in zumindest zwei vorab oder zwischen den eigentlichen Messungen in den verschiedenen Drehstellungen eingenommenen Drehstellungen der physikalischen Drehachse Kontrollmessungen, vorzugsweise Durchstrahlungsbilder, aufgenommenen werden, aus welchen jeweils Lage der virtuellen Drehachse zur physikalischen Drehachse oder zu einem Lage der physikalischen Drehachse charakterisierenden Körper, wie beispielsweise Zylinder oder Dorn, in zumindest einer Koordinate bestimmt wird und die Ergebnisse der Kontrollmessungen kombiniert werden und/oder
- Lage der virtuellen Drehachse zur physikalischen Drehachse durch weitere im Gerät integrierte Sensorik vorab oder während der Messung bestimmt wird.

10. Verfahren nach zumindest einem der vorhergehenden Ansprüche,
**dadurch gekennzeichnet,**
**dass** Durchstrahlungsbilder jeweils nur dann aufgenommen werden, wenn vorab definierte Winkel um die virtuelle Drehachse erreicht sind.

11. Verfahren nach einem der vorhergehenden Ansprüche,
**dadurch gekennzeichnet,**
**dass** die in den mehreren Relativpositionen zwischen Messobjekt, Strahlungsquelle und/oder Detektor, vorzugsweise unterschiedlichen Vergrößerungen aufgenommenen Durchstrahlungsbilder zunächst je Kombination der Relativpositionen zu einem Volumendatensatz rekonstruiert werden, wobei sich diese teilweise überlappen können, um anschließend in einem gemeinsamen Raster im Raum dargestellt zu werden und auswertbar zu sein.

12. Verfahren nach einem der vorhergehenden Ansprüche,
**dadurch gekennzeichnet,**
**dass** in zumindest einer der mehreren Relativpositionen zwischen Messobjekt, Strahlungsquelle und/oder Detektor, vorzugsweise der mit höherer Vergrößerung, ein Teil des Werkstücks in zumindest einer Drehstellung nicht vollständig auf dem Detektor abgebildet wird, wobei dieser Teil des Werkstücks den verfügbaren Messbereich senkrecht zur virtuellen Drehachse verlässt, und die in den aufgenommenen Durchstrahlungsbildern fehlenden Messwerte aus den Messwerten der Durchstrahlungsbilder, vorzugsweise gleicher Drehstellung, errechnet werden, vorzugsweise durch Resamplingverfahren und/oder Interpolationsverfahren und/oder Extrapolationsverfahren.

13. Verfahren nach einem der vorhergehenden Ansprüche,
**dadurch gekennzeichnet,**
**dass** die Darstellung und Auswertung im gemeinsamen Raster im Raum unter Berücksichtigung der Positionen von Messobjekt, Strahlungsquelle und/oder Detektor erfolgt, wobei insbesondere die Ermittlung des gemeinsamen Rasters im Raum anhand der Volumendaten erfolgt, die aus der Messung mit der höchsten Vergrößerung erzeugt wurden.

14. Verfahren nach einem der vorhergehenden Ansprüche,
**dadurch gekennzeichnet,**
**dass** die Messwerte, vorzugsweise Grauwerte für das gemeinsame Raster durch Merging und/oder Resamplingverfahren, vorzugsweise unter Verwendung von Interpolationsverfahren aus den ursprünglichen Messdaten ermittelt werden, wobei in Überlappungsbereichen vorzugsweise eine gewichtete Mittelung der Messwerte erfolgt, wobei vorzugsweise der Gewichtung in Abhängigkeit zum Abstand zu den Überlappungsgrenzen erfolgt.

15. Anordnung zur Bestimmung von Strukturen und/oder Geometrie eines Objektes mittels eines Messsystems, vorzugsweise computertomographischen Messsystems, bestehend aus zumindest einer Strahlungsquelle, zumindest einem Strahlungsdetektor und zumindest einer Drehachse, wobei die Anordnung vorzugsweise in einem Koordinatenmessgerät integriert ist,
**dadurch gekennzeichnet,**
**dass** das Werkstück, mithilfe einer Kombination aus rotatorischer und translatorischer Relativbewegung zwischen Werkstück und Detektor, um eine von der physikalischen Drehachse verschiedene, resultierende Drehachse drehbar ist.

16. Anordnung nach Anspruch 15,
**dadurch gekennzeichnet,**
**dass** die physikalische Drehachse in zumindest einer translatorischen Richtung verstellbar ist und/oder das Messobjekt in zumindest einer translatorischen Richtung verstellbar auf der physikalischen Drehachse angeordnet ist und/oder der Detektor in zumindest einer translatorischen und/oder rotatorischen Achse verstellbar ist, insbesondere die physikalische Drehachse in zwei translatorischen Richtungen verstellbar ist, wobei die erste Richtung nahezu senkrecht zur Detektorebene verläuft und die zweite Richtung nahezu senkrecht zur Richtung der physikalischen Drehachse und nahezu senkrecht zur Normalen der Detektorebene verläuft.

17. Anordnung nach Anspruch 15 oder 16,
**dadurch gekennzeichnet,**
**dass** die physikalische Drehachse nahezu senkrecht zur Detektorebene verstellbar ist und der Detektor in zumindest einer in der Detektorebene verlaufenden Richtung verstellbar ist, die nahezu senkrecht zur Richtung der physikalischen Drehachse verläuft, und vorzugsweise der Detektor um eine Achse drehbar ist, die nahezu parallel zur Drehachse verläuft.

## Claims

1. A method for determining structures and/or geometry of an object such as workpiece by means of a computed-tomography measurement system, comprising at least one radiation source, at least one radiation detector, and at least one axis of rotation, **characterized in**
**that** recordings in form of radiograms, originating from various rotation positions of the workpiece, are combined, for which:
- the workpiece is rotated, with the aid of a combination of rotational and translational relative movement between workpiece and detector, about an resulting axis of rotation different from the physical axis of rotation, and
- measurement object, radiation source, detector occupy several positions relative to one another.

2. Method according to claim 1,
**characterized in**
**that** the physical axis of rotation relative to the detector and/or the radiation source is not stationary, by moving the physical axis of rotation in at least one translational direction and/or the detector in at least one translational direction and/or at least one rotational direction.

3. Method according to claim 1,
**characterized in**
**that** the detector is fixed and the physical axis of rotation is moved in two translational directions, in which the first direction runs nearly perpendicular to the plane of the detector and the second direction is nearly perpendicular to the direction of the physical axis of rotation and nearly perpendicular to the normal of the plane of the detector.

4. Method according to at least one of the preceding claims,
**characterized in**
**that** the workpiece is rotated about a physical axis of rotation not fixed relative to the detector and/or the radiation source by moving the physical axis of rotation in a translational direction that runs nearly perpendicular to the plane of the detector, and the detector is moved in a direction running in the plane of the detector, which is perpendicular to the direction of the physical axis of rotation, and preferably the detector is rotated about a direction that is nearly parallel to the physical axis of rotation and/or the measurement results are corrected in consideration of the radiographing of the workpiece that is off-center relative to the illumination and/or of rotation of the detector given with respect to the illumination.

5. Method according to at least one of the preceding claims,
**characterized in**
**that** the axis of rotation differing from the physical axis of rotation is the virtual axis of rotation of the workpiece, preferably axis of symmetry.

6. Method according to at least one of the preceding claims,
**characterized in**
**that** the physical axis of rotation moves on a closed smooth curve, such as elliptical path, especially circular path, about the virtual axis of rotation or on a straight line that preferably runs perpendicular to the plane of the detector.

7. Method according to at least one of the preceding claims,
**characterized in**
**that** structures and/or geometries of rotationally symmetrical parts and/or tools and/or tomography-capable parts are determined.

8. Method according to at least one of the preceding claims,
**characterized in**
**that** a measurement occurs without prior alignment of the workpiece to the physical axis of rotation and that during the rotational motion of the physical axis of rotation a translational motion of the physical axis of rotation and/or of the detector occurs, with the virtual axis of rotation always remaining arranged centered to the detector by means of alignment prior to and/or during the actual measurement, preferably with the aid of a CNC-controlled coordinate axis.

9. Method according to at least one of the preceding claims,
**characterized in**
**that** a control computer determines the relative position of the virtual axis of rotation to the physical axis of rotation in space and therewith controls the combination of translational and rotational motions, by
- recording control measurements, preferably radiograms, in at least two rotation positions of the physical axes of rotation taken in advance of or between the actual measurements in the various rotation positions, from each of which is determined, in at least one coordinate, position of the virtual axis of rotation to the physical axis of rotation or to a body characterizing position of the physical axis of rotation, such as, for example, cylinder or pin, and the results of the control measurements are combined and/or
- determining in advance or during the measurement position of the virtual axis of rotation to the physical axis of rotation by further sensor systems integrated into the equipment.

10. Method according to at least one of the preceding claims,
**characterized in**
**that** radiograms are each recorded only when predetermined angles about the virtual axis of rotation are reached.

11. Method according to one of the preceding claims,
**characterized in**
**that** the radiograms recorded preferably in different magnifications in the several relative positions between measurement object, radiation source, and/or detector are restored to a volume data set at first per combination of the relative positions, whereby these can partially overlap, in order to be subsequently represented in a common raster in space and to be analyzable.

12. Method according to one of the preceding claims,
**characterized in**
**that** in at least one of the several relative positions between measurement object, radiation source and/or detector, preferably that with a higher magnification, a part of the workpiece is not completely imaged at the detector in at least one rotation position, wherein this part of the workpiece leaves the available measurement area perpendicular to the virtual axis of rotation, and the measurement values missing in the radiograms recorded are calculated from the measurement values of radiograms, preferably of the same rotation position, preferably by resampling methods and/or interpolation methods and/or extrapolation methods.

13. Method according to one of the preceding claims,
**characterized in**
**that** the representation and evaluation occurs in a common raster in space, taking into consideration the positions of the measurement object, radiation source, and/or detector, whereby especially the detection of the common raster in space occurs using the volume data that have been generated from the measurement with the highest magnification.

14. Method according to one of the preceding claims,
**characterized in**
**that** the measurement values, preferably grey values for the common raster, are determined from the original measurement data by merging and/or resampling methods, preferably using interpolation methods, wherein in overlap areas preferably a weighted averaging of the measurement values occurs, whereby preferably the weighting occurs as a function of the distance to the overlapping boundaries.

15. Arrangement for determining structures and/or geometry of an object by means of a measurement system, preferably a computed-tomography measuring system, consisting of at least one radiation source, at least one radiation detector, and at least one axis of rotation, with the arrangement preferably being integrated in a coordinate measuring device,
**characterized in**
**that** the workpiece is rotatable, by means of a combination of rotational and translational relative motion between workpiece and detector, about a resulting axis of rotation different from the physical axis of rotation.

16. Method according to claim 15,
**characterized in**
**that** the physical axis of rotation is movable in at least one translational direction and/or the measurement object is arranged movable in at least one translational direction on the physical axis of rotation and/or the detector is movable in at least one translational and/or rotational axis, especially the physical axis of rotation is movable in two translational directions, wherein the first direction runs nearly perpendicular to the plane of the detector and the second direction runs nearly perpendicular to the direction of the physical axis of rotation and nearly perpendicular to the normal of the plane of the detector.

17. Method according to claim 15 or 16,
**characterized in**
**that** the physical axis of rotation is movable nearly perpendicular to the plane of the detector and the detector is movable in at least one of the directions running in the plane of the detector, which runs nearly perpendicular to the direction of the physical axis of rotation, and preferably the detector is rotatable about an axis that runs nearly parallel to the axis of rotation.

## Revendications

1. Procédé pour déterminer des structures et/ou la géométrie d'un objet, tel qu'une pièce d'oeuvre, au moyen d'un système de mesure tomodensitométrique, comprenant au moins une source de rayonnement, au moins un détecteur de rayonnement et au moins un axe de rotation,
**caractérisé en ce**
**que** des clichés sous forme de radiographies, provenant de différentes positions de pivotement de la pièce d'oeuvre, sont combinés, pour lesquels :
- la pièce d'oeuvre, à l'aide d'une combinaison d'un mouvement relatif rotatif et d'un mouvement relatif translatoire entre la pièce d'oeuvre et le détecteur, est pivotée autour d'un axe de rotation résultant, différent de l'axe de rotation physique et
- l'objet mesuré, la source de rayonnement, le détecteur prennent plusieurs positions les uns par rapport aux autres.

2. Procédé selon la revendication 1,
**caractérisé en ce**
**que** l'axe de rotation physique par rapport au détecteur et/ou à la source de rayonnement n'est pas fixe, du fait que l'axe de rotation physique est déplacé dans au moins une direction translatoire et/ou que le détecteur est déplacé dans au moins une direction translatoire et/ou au moins dans une direction rotative.

3. Procédé selon la revendication 1,
**caractérisé en ce**
**que** le détecteur est fixe et que l'axe de rotation physique est déplacé dans deux directions translatoires, sachant que la première direction est quasiment perpendiculaire au plan du détecteur et que la seconde direction est quasiment perpendiculaire à la direction de l'axe de rotation physique et quasiment perpendiculaire à la normale du plan du détecteur.

4. Procédé selon au moins une des revendications précédentes,
**caractérisé en ce**
**que** la pièce d'oeuvre est pivotée autour d'un axe de rotation physique non fixe par rapport au détecteur et/ou à la source de rayonnement, du fait que l'axe de rotation physique est déplacé dans une direction translatoire qui est quasiment perpendiculaire au plan du détecteur, et que le détecteur est déplacé dans une direction s'étendant dans le plan du détecteur, laquelle est perpendiculaire à la direction de l'axe de rotation physique, et que de préférence le détecteur est pivoté autour d'une direction qui est quasiment parallèle à l'axe de rotation physique et/ou que les résultats des mesures sont corrigés en tenant compte de la radioexposition excentrée de la pièce d'oeuvre par rapport à l'éclairage et/ou de l'éclairage dû à la rotation du détecteur.

5. Procédé selon au moins une des revendications précédentes,
**caractérisé en ce**
**que** l'axe de rotation différent de l'axe de rotation physique est l'axe de rotation virtuel de la pièce d'oeuvre, de préférence un axe de symétrie.

6. Procédé selon au moins une des revendications précédentes,
**caractérisé en ce**
**que** l'axe de rotation physique se déplace sur une courbe lisse fermée telle qu'une trajectoire elliptique, en particulier une trajectoire circulaire, autour de l'axe de rotation virtuel, ou sur une droite qui est de préférence perpendiculaire au plan du détecteur.

7. Procédé selon au moins une des revendications précédentes,
**caractérisé en ce**
**que** sont déterminées des structures et/ou géométries de pièces à symétrie de révolution et/ou d'outils et/ou de pièces pouvant être tomographiées.

8. Procédé selon au moins une des revendications précédentes,
**caractérisé en ce**
**qu'**est effectuée une mesure sans alignement préalable de la pièce d'oeuvre sur l'axe de rotation physique et que pendant le mouvement rotatif de l'axe de rotation physique a lieu un mouvement translatoire de l'axe de rotation physique et/ou du détecteur, sachant que l'axe de rotation virtuel reste constamment centré par rapport au détecteur grâce à l'alignement effectué avant ou pendant la mesure proprement dite, de préférence à l'aide d'un axe de coordonnées à commande numérique par ordinateur.

9. Procédé selon au moins une des revendications précédentes,
**caractérisé en ce**
**qu'**un ordinateur de commande détermine dans l'espace la position relative de l'axe de rotation virtuel par rapport à l'axe de rotation physique et commande ainsi la combinaison des mouvements translatoires et rotatifs, de la manière suivante :
- dans au moins deux positions de pivotement parmi les différentes positions de pivotement prises par l'axe de rotation physique avant ou entre les mesures proprement dites sont enregistrées des mesures de contrôle, de préférence des radiographies, à partir desquelles est respectivement déterminée dans au moins une coordonnée la position de l'axe de rotation virtuel par rapport à l'axe de rotation physique ou à un corps caractérisant la position de l'axe de rotation physique, tel qu'un cylindre ou une broche, et les résultats des mesures de contrôle sont combinés et/ou
- la position de l'axe de rotation virtuel par rapport à l'axe de rotation physique est déterminée avant ou pendant la mesure par un autre système de détection intégré dans l'appareil.

10. Procédé selon au moins une des revendications précédentes,
**caractérisé en ce**
**que** des radiographies ne sont enregistrées que lorsque sont atteints des angles prédéfinis par rapport à l'axe de rotation virtuel.

11. Procédé selon l'une des revendications précédentes,
**caractérisé en ce**
**que** les radiographies enregistrées dans plusieurs positions relatives entre objet mesuré, source de rayonnement et/ou détecteur, de préférence sous différents grossissements, sont tout d'abord reconstituées, pour chaque combinaison de positions relatives, sous forme d'un jeu de données volumiques, sachant qu'elles peuvent partiellement se chevaucher, pour être ensuite représentées dans un graticule commun dans l'espace et être exploitables.

12. Procédé selon l'une des revendications précédentes,
**caractérisé en ce**
**que** dans au moins une des plusieurs positions relatives entre objet mesuré, source de rayonnement et/ou détecteur, de préférence celle avec plus fort grossissement, une partie de la pièce d'oeuvre n'est pas entièrement représentée sur le détecteur dans au moins une position de pivotement, sachant que cette partie de la pièce d'oeuvre sort de la plage de mesure disponible perpendiculairement à l'axe de rotation virtuel, et que les valeurs manquantes dans les radiographies enregistrées sont calculées à partir des valeurs mesurées des radiographies, de préférence pour la même position de pivotement, de préférence par rééchantillonnage et/ou interpolation et/ou extrapolation.

13. Procédé selon l'une des revendications précédentes,
**caractérisé en ce**
**que** la représentation et l'exploitation dans le graticule commun dans l'espace ont lieu en tenant compte des positions de l'objet mesuré, de la source de rayonnement et/ou du détecteur, sachant qu'en particulier la détermination du graticule commun dans l'espace se fait à l'aide des données volumiques qui ont été générées par la mesure avec le plus fort grossissement.

14. Procédé selon l'une des revendications précédentes,
**caractérisé en ce**
**que** les valeurs, de préférence des valeurs de gris pour le graticule commun, sont déterminées par fusion et/ou rééchantillonnage, de préférence en utilisant une méthode d'interpolation à partir des données de mesure initiales, sachant que dans les zones de chevauchement est de préférence calculée une moyenne pondérée des valeurs mesurées, la pondération étant de préférence effectuée en fonction de la distance aux limites de chevauchement.

15. Dispositif pour déterminer des structures et/ou la géométrie d'un objet au moyen d'un système de mesure, de préférence un système de mesure tomodensitométrique, constitué d'au moins une source de rayonnement, d'au moins un détecteur de rayonnement et d'au moins un axe de rotation, le dispositif étant de préférence intégré dans un appareil de mesure de coordonnées,
**caractérisé en ce**
**qu'**au moyen d'une combinaison d'un mouvement rotatif et d'un mouvement translatoire entre la pièce d'oeuvre et le détecteur, la pièce d'oeuvre peut pivoter autour d'un axe de rotation résultant, différent de l'axe de rotation physique.

16. Dispositif selon la revendication 15,
**caractérisé en ce**
**que** l'axe de rotation physique est déplaçable dans au moins une direction translatoire et/ou que l'objet mesuré est disposé de manière déplaçable sur l'axe de rotation physique dans au moins une direction translatoire et/ou que le détecteur est déplaçable sur au moins un axe translatoire et/ou rotatif, en particulier que l'axe de rotation physique est déplaçable dans deux directions translatoires, la première direction étant quasiment perpendiculaire au plan du détecteur et la seconde direction étant quasiment perpendiculaire à la direction de l'axe de rotation physique et quasiment perpendiculaire à la normale du plan du détecteur.

17. Dispositif selon la revendication 15 ou 16,
**caractérisé en ce**
**que** l'axe de rotation physique est déplaçable quasiment perpendiculairement au plan du détecteur et que le détecteur est déplaçable dans au moins une direction s'étendant dans le plan du détecteur et quasiment perpendiculaire à la direction de l'axe de rotation physique, et que de préférence le détecteur peut pivoter autour d'un axe qui est quasiment parallèle à l'axe de rotation.
